# EUROPEAN PATENT APPLICATION

(11) **EP 3 396 499 A1**
(43) Date of publication of application: **31.10.2018**
(21) Application number: 16878155.7
(22) Date of filing: 02.11.2016
(51) Int. Cl.: G06F 3/041

(54) **INFORMATION PROCESSING DEVICE AND INFORMATION PROCESSING METHOD**

(30) Priority: 21.12.2015 JP 2015248231
(71) Applicant: Sony Corporation, Tokyo 108-0075 (JP)
(72) Inventor: MURAKAMI, Tadayoshi, Tokyo 108-0075 (JP)
(74) Representative: MFG Patentanwälte Meyer-Wildhagen Meggle-Freund Gerhard PartG mbB
(86) International application number: PCT/JP2016/082581
(87) International publication number: WO 2017/110257

(57) **Abstract**

[Object] To provide a mechanism capable of causing processing that meets intention of a user who operates input to be performed.

[Solution] An information processing device includes a control unit configured to control processing according to input according to approach of an operation body, on a basis of information regarding a detected position of the input based on a detection result of the input, and information regarding a position of the operation body estimated by using image information obtained by capturing an image in which the operation body serves as a subject. An information processing method includes causing a processor to control processing according to input according to approach of an operation body, on a basis of information regarding a detected position of the input based on a detection result of the input, and information regarding a position of the operation body estimated by using image information obtained by capturing an image in which the operation body serves as a subject.

## Description

### Technical Field

The present disclosure relates to an information processing device and an information processing method.

### Background Art

In recent years, various input devices suitable for operation bodies to be used for input operation have been developed as the operation bodies have been diversified. Specifically, there is produced an input device that sets a pen (stylus), a finger, or both thereof as an operation body and detects input on the basis of an approach, i.e., proximity, or a contact of the operation body to a detection surface.

Among such input devices that set both a pen and a finger as an operation body, an input device in which a display unit and an input unit are integrated with each other has been particularly used by creators who create images by manual operation. It is considered that this is because the input device has delicacy of input and intuitiveness that the creators feel as if the creators draw an image on paper, which are obtained by directly performing input with a pen on a display screen, and has simplicity of operation which is obtained by directly performing input with a finger without using an object.

Meanwhile, the input device that sets both the pen and the finger as an operation body detects a user's unintentional input in some cases. Specifically, in a case where both the pen and the finger are detected by a pressure-sensitive method, it is difficult to distinguish between a contact with the pen and a contact with the finger (human body). Note that this also occurs in an electrostatic capacitance method in some cases. Therefore, when, for example, a hand holding a pen is brought into contact with an input detection surface during input with the pen, both contacts with the pen and the hand are detected as input. Thus, the user's unintentional input is detected.

Regarding this, there is provided a technology referred to as so-called palm rejection (or palm cancel) for restraining the user's unintentional input from being detected or disabling the user's unintentional input. For example, Patent Literature 1 discloses an invention regarding an electronic device including a touchscreen, a memory storing correspondence between a touch position on the touchscreen and a palm rejection area, and a processor that disables touch operation in the palm rejection area corresponding to a detected touch position on the basis of the correspondence.

### Citation List

### Patent Literature

Patent Literature 1: JP 2012-221358A

### Disclosure of Invention

### Technical Problem

However, even in the electronic device disclosed in Patent Literature 1, processing against intention of a user who operates input is performed in some cases. For example, in a case where a contact that is not intended by the user (hereinafter, also referred to as "palm contact") occurs on a place different from a palm rejection area that is stored in advance and corresponds to a touch position, touch operation detected on the basis of the palm contact is not disabled. As a result, display processing or the like that is not intended by the user is executed on the basis of the touch operation.

In view of this, the present disclosure proposes a mechanism capable of causing processing that meets intention of a user who operates input to be performed.

### Solution to Problem

According to the present disclosure, there is provided an information processing device including a control unit configured to control processing according to input according to approach of an operation body, on a basis of information regarding a detected position of the input based on a detection result of the input, and information regarding a position of the operation body estimated by using image information obtained by capturing an image in which the operation body serves as a subject.

In addition, according to the present disclosure, there is provided an information processing method including causing a processor to control processing according to input according to approach of an operation body, on a basis of information regarding a detected position of the input based on a detection result of the input, and information regarding a position of the operation body estimated by using image information obtained by capturing an image in which the operation body serves as a subject.

In addition, according to the present disclosure, there is provided a program for causing a computer to achieve a control function of controlling processing according to input according to approach of an operation body on a basis of information regarding a detected position of the input based on a detection result of the input, and information regarding a position of the operation body estimated by using image information obtained by capturing an image in which the operation body serves as a subject.

### Advantageous Effects of Invention

As described above, the present disclosure provides a mechanism capable of causing processing that meets intention of a user who operates input to be performed. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram schematically illustrating a configuration example of an external appearance of an information processing device according to an embodiment of the present disclosure.
[FIG. 2] FIG. 2 is a diagram illustrating a conventional palm rejection technology based on a contact area.
[FIG. 3] FIG. 3 is a diagram illustrating a conventional palm rejection technology based on a detected position.
[FIG. 4] FIG. 4 is a diagram illustrating a palm rejection technology using a plurality of conventional detection methods.
[FIG. 5] FIG. 5 is a block diagram illustrating an example of a schematic functional configuration of an information processing device according to a first embodiment of the present disclosure.
[FIG. 6] FIG. 6 is a diagram illustrating an arrangement example of IR markers in the information processing device according to this embodiment.
[FIG. 7] FIG. 7 is a diagram illustrating a setting example of a spatial coordinate system in this embodiment.
[FIG. 8] FIG. 8 is a diagram illustrating an example of a user's input operation in this embodiment.
[FIG. 9A] FIG. 9A is a diagram illustrating a state in which a user performs operation, which is seen from above in the above-mentioned Z-axis direction with respect to a detection surface.
[FIG. 9B] FIG. 9B is a diagram illustrating a state in which a user performs operation, which is seen in the above-mentioned X-axis direction with respect to a detection surface.
[FIG. 10] FIG. 10 is a flowchart conceptionally showing an overview of processing performed by the information processing device according to this embodiment.
[FIG. 11] FIG. 11 is a flowchart conceptionally showing processing regarding an already-known contact point in the information processing device according to this embodiment.
[FIG. 12] FIG. 12 is a flowchart conceptionally showing processing regarding a new contact point in the information processing device according to this embodiment.
[FIG. 13] FIG. 13 is a diagram illustrating an example of input with a pen.
[FIG. 14] FIG. 14 is a diagram illustrating an example of input with a finger and an example of input interpolation.
[FIG. 15] FIG. 15 is a diagram illustrating an example of input operation with a finger of a hand holding a pen.
[FIG. 16] FIG. 16 is a diagram illustrating an example of processing performed in a case where input operation with a finger of a hand holding a pen is not considered.
[FIG. 17] FIG. 17 is a block diagram illustrating an example of a schematic functional configuration of an information processing device according to a second embodiment of the present disclosure.
[FIG. 18] FIG. 18 is a diagram illustrating an example of a user's input operation in this embodiment.
[FIG. 19] FIG. 19 is a diagram illustrating an example of multi-touch operation in a third embodiment of the present disclosure.
[FIG. 20] FIG. 20 is a flowchart conceptionally showing input determination processing of multi-touch in an information processing device according to this embodiment.
[FIG. 21] FIG. 21 is a block diagram illustrating an example of a schematic functional configuration of an information processing device according to a fourth embodiment of the present disclosure.
[FIG. 22A] FIG. 22A is a diagram illustrating an example of an effective detection area that is set on the basis of a single estimated position.
[FIG. 22B] FIG. 22B is a diagram illustrating an example of effective detection areas that are set on the basis of a plurality of estimated positions.
[FIG. 23] FIG. 23 is a diagram illustrating processing performed by the information processing device according to this embodiment.
[FIG. 24] FIG. 24 is a diagram illustrating processing performed by the information processing device according to this embodiment.
[FIG. 25] FIG. 25 is a diagram illustrating processing performed by the information processing device according to this embodiment.
[FIG. 26] FIG. 26 is a diagram illustrating processing performed by the information processing device according to this embodiment.
[FIG. 27] FIG. 27 is a diagram illustrating an example of an effective detection area that is set in the information processing device according to a modification example of this embodiment.
[FIG. 28] FIG. 28 is a diagram illustrating another example of the effective detection area that is set in the information processing device according to the modification example of this embodiment.
[FIG. 29] FIG. 29 is an explanatory diagram showing a hardware configuration of an information processing device according to an embodiment of the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Overview of information processing device according to embodiment of the present disclosure
2. First embodiment (basic form)
   2-1. Configuration of device
   2-2. Processing of device
   2-3. Conclusion of first embodiment
   2-4. Modification example
3. Second embodiment (processing based on posture of pen)
   3-1. Configuration of device
   3-2. Conclusion of second embodiment
   3-3. Modification example
4. Third embodiment (determination of plurality of simultaneous inputs)
   4-1. Configuration of device
   4-2. Processing of device
   4-3. Conclusion of third embodiment
5. Fourth embodiment (setting of effective detection area of touch input) 5-1. Configuration of device
   5-2. Processing of device
   5-3. Conclusion of fourth embodiment
   5-4. Modification example
6. Hardware configuration of information processing device according to embodiment of the present disclosure
7. Conclusion

### <1. Overview of information processing device according to embodiment of the present disclosure>

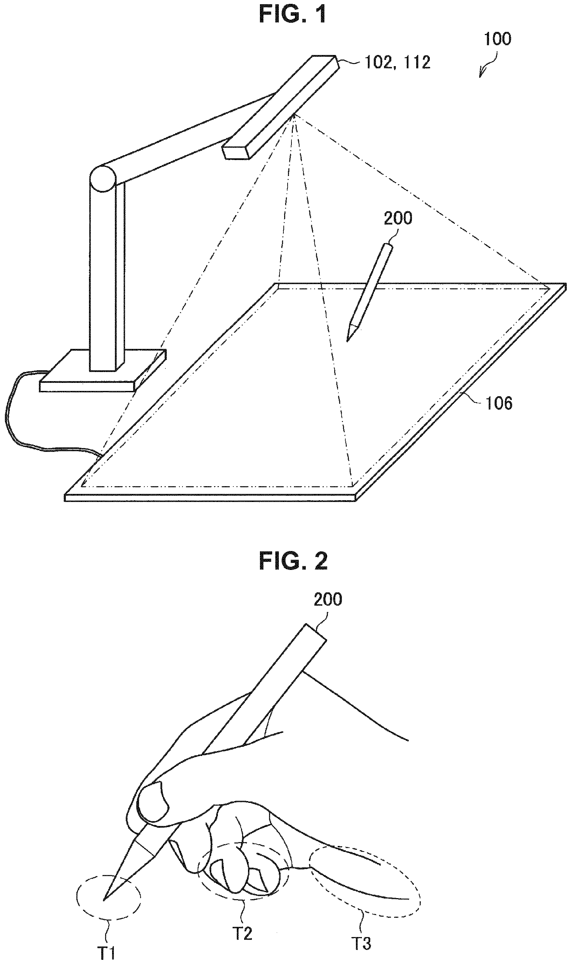

First, an overview of an information processing device 100 according to an embodiment of the present disclosure will be described with reference to FIG. 1. FIG. 1 is a diagram schematically illustrating a configuration example of an external appearance of the information processing device 100 according to an embodiment of the present disclosure.

The information processing device 100 has an input detection function and a display output function. Specifically, the input detection function has a detection surface and detects a user's input to the detection surface. Further, the display output function outputs an image on the basis of input detected by the input detection function. Therefore, the information processing device 100 can output an image based on input operation by the user.

For example, as illustrated in FIG. 1, the information processing device 100 includes a touch input unit 106 having part of the input detection function and a projection unit 112 having part of the display output function. The information processing device 100 causes the touch input unit 106 to detect, for example, input with a pen 200 and causes the projection unit 112 to project an image onto a detection surface of the touch input unit 106 on the basis of the detected input.

Herein, operation bodies regarding input using a touchscreen and the like are a pen and a finger. Operability of drawing images is improved by using both the operation bodies as described above.

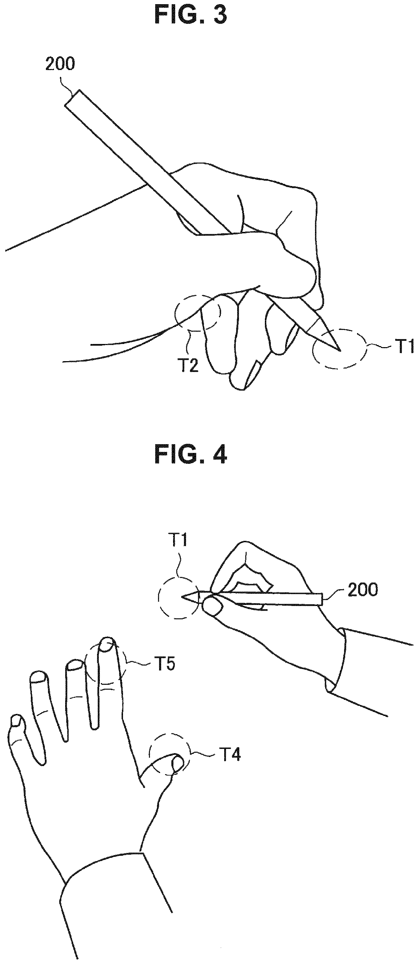

However, in a case where both the pen and the finger are used as the operation body as described above, the user's unintentional input is detected in some cases. Regarding this, according to a technology called palm rejection, detection of the user's unintentional input is avoided or detected input is disabled. Hereinafter, a conventional palm rejection technology will be described with reference to FIGS. 2 to 4. FIG. 2 is a diagram illustrating a conventional palm rejection technology based on a contact area, FIG. 3 is a diagram illustrating a conventional palm rejection technology based on a detected position, and FIG. 4 is a diagram illustrating a palm rejection technology using a plurality of conventional detection methods.

As the palm rejection technology, there is a technology of determining with which input is performed, a pen or a finger, on the basis of a size of a contact area of detected input and disabling input without using the pen or the finger. For example, in a case where the user performs input with the pen 200 as illustrated in FIG. 2, a contact area of a contact point T1 between a nib of the pen 200 and the detection surface corresponds to a contact area of the pen 200 stored in advance, and therefore input detected at the contact point T1 is processed as effective input. Further, a contact area of a contact point T3 between a side surface of a hand holding the pen 200 and the detection surface is larger than the contact area of the pen 200, and therefore input detected at the contact point T3 is processed as ineffective input.

However, in the technology, in a case where a contact area regarding detected input corresponds to a contact area of the pen or a finger, the detected input is not disabled even in a case where the detected input is the user's unintentional input. For example, in a case where it is determined that a contact area of a contact point T2 between a finger of the hand holding the pen 200 and the detection surface, which is illustrated in FIG. 2, corresponds to the contact area of the pen 200, input detected at the contact point T2 is processed as effective input.

Further, as another palm rejection technology, there is a technology of, in a case where a plurality of inputs are detected, enabling an input at a detected position that is far from any other detected positions of inputs in a predetermined direction and disabling the other inputs. For example, it is considered that a contact point between the pen 200 and the detection surface is positioned in a direction further away from the user than any other contact points. Therefore, in the technology, input at a contact point positioned in the direction further away from the user than the other contact points is processed as effective input and the inputs at the other contact points are processed as ineffective inputs.

However, in the technology, in a case where a wrist of the hand holding the pen 200 is bent, enabling or disabling of input against the user's intention is determined in some cases. For example, as illustrated in FIG. 3, the wrist of the hand holding the pen 200 is bent in a direction toward the user (bent inward), a contact point T2 with the finger is positioned in the direction further away from the user than a contact point T1 between the pen 200 and the detection surface. This is common to many left-handed users in particular. In this case, input at the contact point T1 is processed as ineffective input and input at the contact point T2 is processed as effective input.

Further, as a still another palm rejection technology, there is a technology of using different detection methods depending on a type of the operation body. For example, an electromagnetic induction method is used to detect input with a pen, and an electrostatic capacitance method is used to detect input with a finger. In this case, for example, input at a contact point T1 between the pen 200 and the detection surface, which is illustrated in FIG. 4, is processed as input with the pen 200. Further, input at contact points T4 and T5 between the finger and the detection surface is processed as input with a finger.

As described above, it is possible to distinguish between input with the pen and input with a finger in the technology. Therefore, in a case where the user desires to perform only input with the pen, it is possible to perform palm rejection more securely by causing a detection function of input with a finger to be stopped. Further, on the contrary, it is also possible to cause only input with the finger to be detected.

However, in a case where both input with a pen and input with a finger are used, processing that is not intended by the user is generated also in the technology in some cases. This is because it is difficult to distinguish between a contact point at which the user intends to perform input and brings his/her finger into contact with the detection surface and a contact point at which the user brings his/her finger or another part of his/her body into contact without intending to perform input. As a result, processing that is not intended by the user is generated. Note that, regarding this, in order to avoid stress and reduction in operation efficiency caused by the processing, it is considered that some users cause the detection function of input with a finger to be stopped in input operation with the pen. Thus, it can be said that technical problems still remain to use both input with the pen and input with a finger.

As described above, processing against the user's intention may be performed in a case where both input with a pen and input with a finger are used in the conventional palm rejection technologies.

In view of this, in the present disclosure, the information processing device 100 controls processing based on input based on an approach of an operation body on the basis of information regarding a detected position of the input based on a detection result of the input and information regarding a position of the operation body estimated by using image information obtained by capturing an image in which the operation body serves as a subject.

For example, as illustrated in FIG. 1, the information processing device 100 includes not only the touch input unit 106 and the projection unit 112 but also an imaging unit 102. The information processing device 100 acquires a detection result of input with the pen 200 or a finger from the touch input unit 106. Further, the information processing device 100 acquires an image which is captured by the imaging unit 102 and in which the pen 200 or finger serves as a subject. Then, the information processing device 100 specifies a position at which the input has been detected on the basis of the detection result of the input and estimates a position of the pen 200 or finger on the basis of the image. Then, in a case where the detected position and a two-dimensional position of the estimated position do not correspond to each other, the information processing device 100 does not process input at the detected position, and, in a case where the detected position and the two-dimensional position of the estimated position correspond to each other, the information processing device 100 performs processing based on the input at the detected position.

Therefore, processing based on the input is determined on the basis of not only the detection result of the input based on the approach of the operation body but also the image information in which the operation body appears. This makes it possible to improve accuracy of the processing, as compared to a case where only the detection result of the input based on the approach of the operation body is used. Thus, it is possible to cause processing that meets intention of the user who operates input to be performed. Hereinafter, details of the information processing device 100 will be described. Note that, for convenience of explanation, the information processing devices 100 according to first to fourth embodiments are distinguished by adding numbers corresponding to the embodiments to ends, such as an information processing device 100-1 to an information processing device 100-4.

Note that terms in each embodiment mean as follows.

Estimated position: means a position of an operation body estimated on the basis of image information, is a three-dimensional position, and includes a position (two-dimensional position) corresponding to a detection surface of input.

Estimated contact area (estimated area): means an area on the detection surface of input that includes the two-dimensional position of the estimated position.

Detected position of input (detected position): means a position on the detection surface of input detected on the basis of approach of the operation body.

Effective detection area (detection area): means an area on the detection surface on which input is detected.

### <2. First embodiment (basic form)>

Hereinabove, the overview of the information processing device 100 according to an embodiment of the present disclosure has been described. Next, the information processing device 100-1 according to the first embodiment of the present disclosure will be described.

### <2-1. Configuration of device>

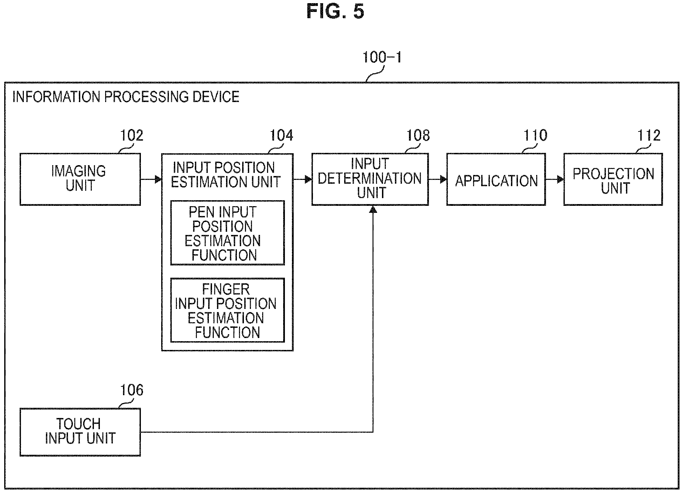

First, a functional configuration of the information processing device 100-1 according to the first embodiment of the present disclosure will be described with reference to FIG. 5. FIG. 5 is a block diagram illustrating an example of a schematic functional configuration of the information processing device 100-1 according to the first embodiment of the present disclosure.

As illustrated in FIG. 5, the information processing device 100-1 includes the imaging unit 102, an input position estimation unit 104, the touch input unit 106, an input determination unit 108, an application 110, and the projection unit 112.

### (Imaging unit)

The imaging unit 102 captures an image in which an operation body serves as a subject. Specifically, the imaging unit 102 is arranged so that the detection surface of the touch input unit 106 and a periphery of the detection surface fall within an imaging range and provides a captured image to the input position estimation unit 104. Note that the imaging unit 102 may be a visible light camera or infrared (IR) camera or may be a combination of the visible light camera and the IR camera. Further, a plurality of imaging units 102 may be provided. Further, a measurement unit made up of a sensor regarding an arbitrary sensor system capable of three-dimensionally measuring the operation body may be provided instead of or in addition to the imaging unit 102.

Further, the imaging unit 102 may be made up of a stereo camera including at least two cameras (IR cameras) as constituent elements.

### (Input position estimation unit)

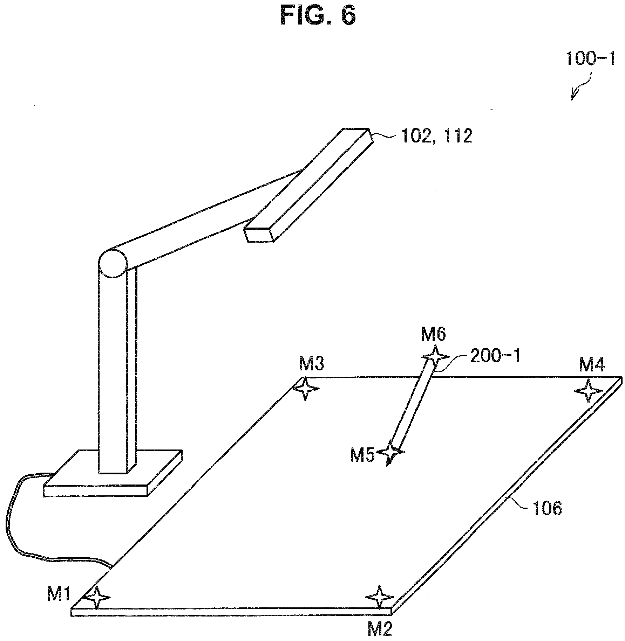

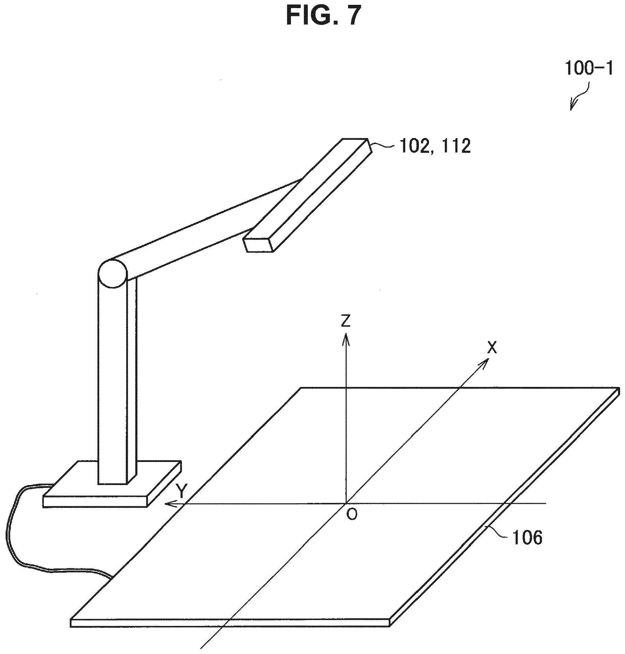

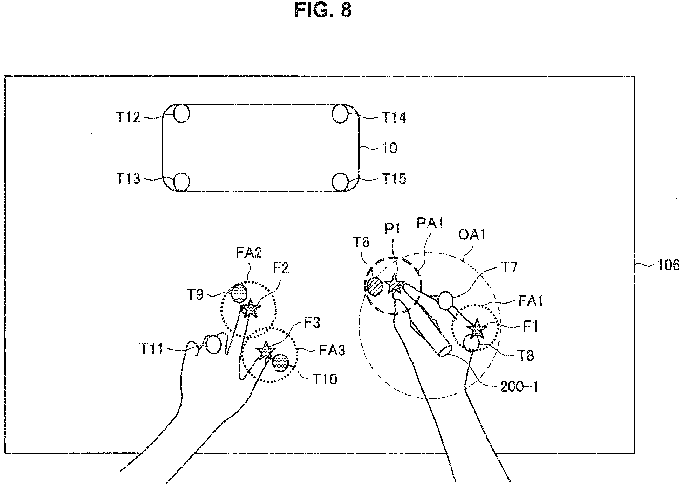

The input position estimation unit 104, which serves as a part of the control unit, estimates a position of the operation body on the basis of image information obtained by capturing an image in which the operation body serves as a subject. Specifically, the position of the operation body is a position that is close to the detection surface or a position that is not close to the detection surface. Hereinafter, the estimated position of the operation body will also be referred to as "estimated position". Further, the operation body includes an object operated by the user, for example, a pen-shaped object or a hand or finger of the user, and the input position estimation unit 104 has a pen input position estimation function and a finger input position estimation function corresponding thereto. Further, the input position estimation functions will be described in detail with reference to FIGS. 6 to 8. FIG. 6 is a diagram illustrating an arrangement example of IR markers in the information processing device 100-1 according to the present embodiment, and FIG. 7 is a diagram illustrating a setting example of a spatial coordinate system in the present embodiment. Further, FIG. 8 is a diagram illustrating an example of a user's input operation in the present embodiment.

First, the input position estimation unit 104 estimates a position of the detection surface of the touch input unit 106. For example, as illustrated in FIG. 6, IR markers M1 to M4 serving as infrared light emitters are arranged on the detection surface.

Then, the input position estimation unit 104 sets a spatial coordinate system on the basis of the estimated position of the detection surface. For example, as illustrated in FIG. 7, the input position estimation unit 104 sets a spatial coordinate system in which the center of the detection surface serves as an origin O, a long-side direction of the detection surface serves as an X axis, a short-side direction of the detection surface serves as a Y axis, and a direction vertical to the detection surface serves as a Z axis.

Thereafter, the input position estimation unit 104 estimates a position of the operation body on the basis of an image provided from the imaging unit 102.

Specifically, the input position estimation unit 104 determines an estimated position of a pen 200-1 (hereinafter, also referred to as "estimated pen-input position") by using the pen input detection function. More specifically, the input position estimation unit 104 detects the pen 200-1 on the basis of an IR marker serving as an infrared light emitter appearing in the image and estimates a position of a part of the detected pen 200-1 at which input is performed (hereinafter, also referred to as "input part"). For example, as illustrated in FIG. 6, IR markers M5 and M6 are attached to both ends of the pen 200-1. In view of this, the input position estimation unit 104 detects the pen 200-1 on the basis of presence/absence of the IR markers M5 and M6. Then, a spatial position and a posture of the pen 200-1 are specified on the basis of positions of the IR markers M5 and M6 appearing in the stereo image and a parallax between the cameras forming the imaging unit 102. For example, a nib of the pen 200-1 illustrated in FIG. 8 is determined as an estimated pen-input position P1. Note that, in a case where the whole operation body or most of the operation body is an input part, specification of the input part may be omitted.

Further, the input position estimation unit 104 estimates a position of a finger by using the finger input detection function. Hereinafter, the estimated position of the finger will also be referred to as "estimated finger-input position". Specifically, the input position estimation unit 104 detects the finger serving as the operation body on the basis of a depth map generated on the basis of the stereo image provided from the imaging unit 102 and estimates a position of the detected finger. For example, the input position estimation unit 104 detects the finger by performing image recognition processing with the use of the stereo image and the depth map generated on the basis of the stereo image. Then, the input position estimation unit 104 determines a position of a tip of the detected finger, i.e., coordinates on XYZ axes as the estimated finger-input position. For example, a tip of a first finger of a left hand illustrated in FIG. 8 is determined as an estimated finger-input position F2. Note that, at this time, an object other than the operation body may be detected. For example, the object other than the operation body is other parts of a human body other than a hand or a finger, such as an arm, or an object that is not a human body. Further, other parts of a human body of the user other than a hand or a finger may be recognized as the operation body.

Note that the IR markers may be detachable. Further, whether or not the IR markers emit light or whether or not the IR markers receive light may be switched on the basis of the user's setting operation or the like. Further, the finger of the user, as well as the pen 200-1, may be detected by using IR markers. For example, in a case where input is performed with a finger on which the IR markers illustrated in FIG. 6 are mounted, the input position estimation unit 104 detects the finger on the basis of presence/absence of the IR markers. Further, conversely, the pen 200-1, as well as the finger, may be detected by using image recognition processing.

Further, the input position estimation unit 104 determines an area including a position corresponding to the detection surface of input at the estimated position, i.e., a two-dimensional position on the detection surface serving as a reference (hereinafter, also referred to as "estimated contact area") as an estimated area on the basis of the image information. The estimated contact area will be described in detail with reference to FIG. 8.

When the position of the operation body is estimated on the basis of the image information obtained by the imaging unit 102 capturing an image, the input position estimation unit 104 determines an estimated contact area including a position corresponding to the detection surface of input at the estimated position of the operation body. Specifically, when the position of the operation body is estimated, the input position estimation unit 104 determines, as the estimated contact area, a range within a predetermined distance from the estimated two-dimensional position of the operation body on the detection surface serving as a reference. For example, when the nib of the pen 200-1 illustrated in FIG. 8 is determined as the estimated pen-input position P1, the input position estimation unit 104 determines the inside of a circle indicated by a broken line in which a two-dimensional position of the estimated pen-input position P1 serves as the center as an estimated contact area (hereinafter, also referred to as "estimated pen-input contact area") PA1 of input with the pen 200-1. Further, when the tip of the first finger of the left hand illustrated in FIG. 8 is determined as the estimated finger-input position F2, the input position estimation unit 104 determines the inside of a circle indicated by a dotted line in which a two-dimensional position of the estimated finger-input position F2 serves as the center as an estimated contact area (hereinafter, also referred to as "estimated finger-input contact area") FA2 of input with a finger.

Note that a size of the estimated contact area may be changed in accordance with accuracy or precision of the estimated position. For example, the estimated contact area is set to be smaller as a shift between the estimated position and a detected position is smaller or variations in estimated positions are smaller. Further, the estimated contact area may be dynamically changed. Further, a shape of the estimated contact area is not limited to a circular shape and may be another arbitrary shape. For example, the shape of the estimated contact area may be an oval shape, another curved shape, a polygonal shape, or the like.

Further, in a case where the operation body is a pen-shaped object, the input position estimation unit 104 determines an area in which input with operation bodies other than the operation body is ignored (hereinafter, also referred to as "pen input exclusive area"). For example, the input position estimation unit 104 sets a pen input exclusive area OA1 of the estimated pen-input position P1 illustrated in FIG. 8. As an example, the pen input exclusive area OA1 is set as an area of a range within a predetermined distance from a center point of the detected pen 200-1.

### (Touch input unit)

The touch input unit 106, which serves as a detection device, detects input with the operation body. Specifically, the touch input unit 106 detects input on the basis of an approach (proximity or contact) of the operation body. Then, the touch input unit 106 provides a detection result in which a detected position of the input is specified to the input determination unit 108. More specifically, the touch input unit 106 detects input by using a pressure-sensitive method. For example, the touch input unit 106 detects input on the basis of presence/absence of pressure caused by a contact of the operation body or the magnitude of the pressure. Note that the touch input unit 106 may use another input detection method such as an electrostatic capacitance method or an electromagnetic induction method. Further, the touch input unit 106 may use a plurality of input detection methods and may use different input detection methods for respective types of the operation bodies.

Further, the touch input unit 106 generates information indicating a contact point of the detected input (hereinafter, also referred to as "contact point information") and provides the generated contact point information to the input determination unit 108. For example, the contact point information includes information indicating a position of the contact point on the detection surface, i.e., coordinates of the contact point on the detection surface and identification information such as an ID for identifying the contact point. Note that, regarding an already-known contact point described below, the touch input unit 106 updates information indicating a position of the contact point in contact point information having the same identification information.

### (Input determination unit)

The input determination unit 108, which serves as a part of the control unit, controls processing based on input on the basis of a detected position of input indicated by a detection result of the input obtained from the touch input unit 106 and an estimated position serving as a position of the operation body estimated by the input position estimation unit 104. Specifically, the input determination unit 108 controls a position corresponding to the detection surface of the processing in accordance with whether or not the estimated position corresponds to the detected position. Whether or not the estimated position corresponds to the detected position is determined on the basis of whether or not the detected position is included in an estimated contact area including a position corresponding to the detection surface of the input at the estimated position. Further, a function of the input determination unit 108 will be described in detail with reference to FIG. 8.

First, the input determination unit 108 acquires contact point information from the touch input unit 106 as an input detection result and acquires information indicating an estimated position from the input position estimation unit 104. Then, the input determination unit 108 performs the following contact point determination processing on each piece of the contact point information.

In a case where a two-dimensional position of the estimated position corresponds to a detected position, the input determination unit 108 determines the detected position as a position of the processing. For example, the input determination unit 108 determines, as an effective contact point of input with the pen 200-1 (hereinafter, also referred to as "pen input contact point"), a contact point T6 that is a detected position included in the estimated pen-input contact area PA1 regarding the estimated pen-input position P1 of the pen 200-1 illustrated in FIG. 8. Note that the contact point determined as the pen input contact point is transmitted to the application 110 as notification.

Further, in a case where the two-dimensional position of the estimated position does not correspond to the detected position, the input determination unit 108 does not determine the detected position as the position of the processing. For example, a contact point T7 that is not included in the estimated pen-input contact area PA1 regarding the estimated pen-input position P1 illustrated in FIG. 8 is not determined as the pen input contact point and is determined as an ineffective contact point. That is, the contact point T7 is not transmitted to the application 110 as notification.

Similarly, even in a case where an object other than the operation body is arranged on the detection surface of the touch input unit 106 and input is detected, a contact point of the object is determined as an ineffective contact point unless the contact point of the input is included in the estimated contact area. For example, even in a case where an object 10 illustrated in FIG. 8 other than the operation body is arranged on the detection surface and contact points T12 to T15 exist, the contact points T12 to T15 are not determined as the pen input contact points or finger input contact points described below because the contact points T12 to T15 are not included in any one of the estimated pen-input contact area PA1 and estimated finger-input contact areas FA1 to FA3 described below. That is, the contact points T12 to T15 are not transmitted to the application as notification, and processing based on input at the contact points T12 to T15 is not performed.

Note that, even in a case where the operation body is a finger, the processing is similarly performed. For example, contact points T9 and T10 included in the respective estimated finger-input contact areas FA2 and FA3 regarding estimated finger-input positions F2 and F3 of the first finger and a thumb of the left hand illustrated in FIG. 8 are determined as effective contact points of input with fingers (hereinafter, also referred to as "finger input contact points"). Hereinafter, in a case where the pen input contact point and the finger input contact points are not distinguished, those input contact points are collectively referred to as "effective contact point".

Further, the input determination unit 108 controls the position of the processing regarding input detected in the vicinity of an object operated by the user in accordance with whether or not the operation body is an object operated by the user. Specifically, in a case where the operation body is a pen-shaped object, the input determination unit 108 determines, as an ineffective contact point, a detected position of input that is detected in the vicinity of the pen-shaped object and is input other than input with the pen-shaped object.

For example, the input determination unit 108 determines the contact point T7 included in the pen input exclusive area OA1 regarding the estimated pen-input position P1 illustrated in FIG. 8 as the ineffective contact point. Further, the input determination unit 108 also determines, as an ineffective contact point, a contact point T8 included in the estimated contact area FA1 regarding a position F1 that is estimated as a position of the finger on the basis of false detection of the operation body because the contact point T8 is included in the pen input exclusive area OA1.

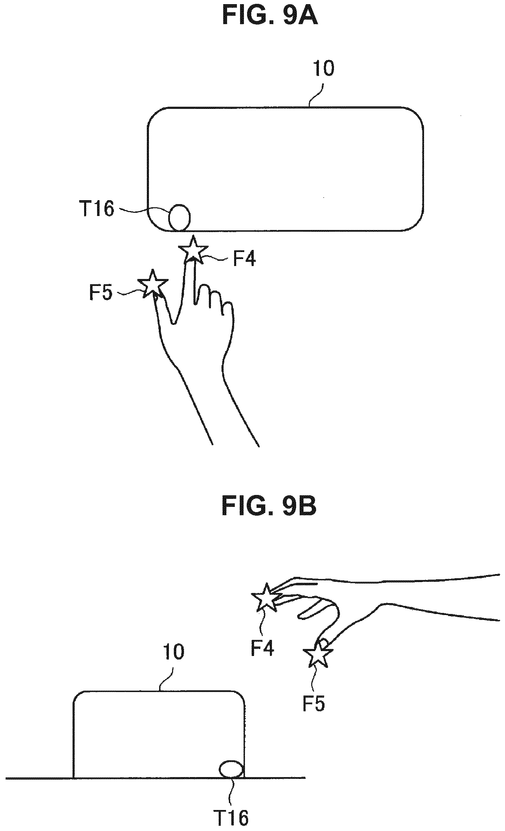

Further, the position of the processing may be controlled in accordance with the estimated position of the operation body. Specifically, the input determination unit 108 controls the position of the processing on the basis of a positional relationship between an estimated position and a detection surface. Further, control of the position of the processing based on the positional relationship between the estimated position and the detection surface will be described with reference to FIGS. 9A and 9B. FIG. 9A is a diagram illustrating a state in which the user performs operation, which is seen from above in the above-mentioned Z-axis direction with respect to the detection surface, and FIG. 9B is a diagram illustrating a state in which the user performs operation, which is seen in the above-mentioned X-axis direction with respect to the detection surface.

There will be described a case where the position of the processing is controlled on the basis of a two-dimensional position that is an estimated position of the operation body and is in parallel to the detection surface. Note that, herein, it is presupposed that an optical axis of the imaging unit 102 is vertical to the detection surface, for convenience of explanation. For example, in a case where the position of the processing is controlled only on the basis of a position in XY-axes directions in parallel to the detection surface illustrated in FIG. 9A and an estimated contact area is set for an estimated finger-input position F4, it is substantially determined that a contact point T16 of the object 10 is input with the finger, and the contact point T16 is determined as a finger input contact point. However, actually, as illustrated FIG. 9B, the finger is positioned above the object 10 and the user does not intend to perform input with the finger in some cases. Note that, although an example where the operation body is a finger has been described in the above description, the same applies to a case where the operation body is the pen 200-1.

In view of this, the input determination unit 108 controls the position of the processing on the basis of the positional relationship between the estimated position of the operation body and the detection surface. Specifically, the input determination unit 108 controls whether to set an estimated contact area on the basis of a distance between the estimated position and the detection surface. For example, in a case where the distance between the estimated position and the detection surface is equal to or larger than a predetermined length, the input determination unit 108 does not set the estimated contact area. With this, even in a case where an object other than the operation body is arranged on the detection surface and the operation body is positioned above or in the vicinity of the object, it is possible to restrain processing from being performed on the basis of a contact point of the object. Note that an example where whether to set an estimated contact area is controlled by using the distance between the estimated position and the detection surface has been described in the above description. However, whether to set the estimated contact area may be controlled by using coordinate information of the estimated position in the Z-axis direction.

Hereinabove, a basic function of the input determination unit 108 has been described. Herein, the above-mentioned basic function is a function exerted on the assumption that there is no shift between the estimated position of the operation body and the detected position or, even in a case where the shift exists, the shift is sufficiently small that the detected position can be in the estimated contact area.

However, the above-mentioned shift is larger as movement of the operation body is faster. This is because a delay of determination processing of an estimated position is larger than that of detection processing of touch input because the determination processing of an estimated position is more complicated than the detection processing of touch input. As a result, even in a case where input is continued, an effective contact point is out of the estimated contact area in some cases. Then, a contact point that has been the effective contact point is determined as an ineffective contact point, and therefore processing based on the input is interrupted. This may lead to a result that is not intended by the user.

In view of this, the input determination unit 108 performs different types of contact point determination processing between a contact point of input that has been detected and is being continuously detected (hereinafter, also referred to as "already-known contact point") and a contact point of newly detected input (hereinafter, also referred to as "new contact point"). Specifically, regarding the already-known contact point, the input determination unit 108 determines an attribute of the contact point on the basis of presence/absence of an estimated contact area regarding an estimated position of the already-known contact point.

For example, regarding the already-known contact point determined as a pen input contact point, the input determination unit 108 determines whether or not the already-known contact point continuously serves as the pen input contact point on the basis of whether or not an estimated pen-input contact area regarding an estimated pen-input position of the pen input contact point continuously exists. Meanwhile, the new contact point has never been subjected to the contact point determination processing, and therefore the contact point determination processing is performed by using the above-mentioned basic function. Note that the same applies to a case of a finger input contact point.

Therefore, effectiveness of the contact point is maintained in a case where the estimated contact area continuously exists. Thus, even in a case where the operation body moves at a high speed, processing based on input is not interrupted. Accordingly, it is possible to perform operation at a high speed while restraining a processing result that is not intended by the user from being generated.

Note that an estimated position may be corrected on the basis of a past estimated position. For example, the estimated position is stored in time series, and the input determination unit 108 corrects a current estimated position by using movement prediction processing on the basis of the estimated position stored in time-series. For example, the movement prediction processing may be interpolation processing using a Kalman filter or the like. Further, correction of the estimated position may be performed by the input position estimation unit 104. Further, only a two-dimensional position of an estimated position on the detection surface serving as a reference may be corrected.

### (Application)

Description of the configuration of the information processing device 100-1 will be continued with reference to FIG. 5. The application 110 performs processing on the basis of an input determination result obtained from the input determination unit 108. Specifically, the application 110 performs processing based on input at a contact point transmitted by the input determination unit 108 as notification. For example, as the processing, the application 110 generates an image including a display object such as a letter, a figure, a symbol, or a picture in response to the input at the contact point transmitted as notification and causes the projection unit 112 to project the generated image. Further, as the processing, the application 110 may perform internal processing based on the input at the contact point transmitted as notification, for example, storage processing, calculation processing, communication processing, or the like.

### (Projection unit)

The projection unit 112 projects an image provided from the application 110. Specifically, the projection unit 112 projects an image onto the detection surface of the touch input unit 106. Note that an image suitable for a shape of the detection surface serving as a projection destination may be provided from the application and the image may be projected in the form of, for example, projection mapping.

### <2-2. Processing of device>

Next, processing performed by the information processing device 100-1 according to the present embodiment will be described.

### (Overview of processing)

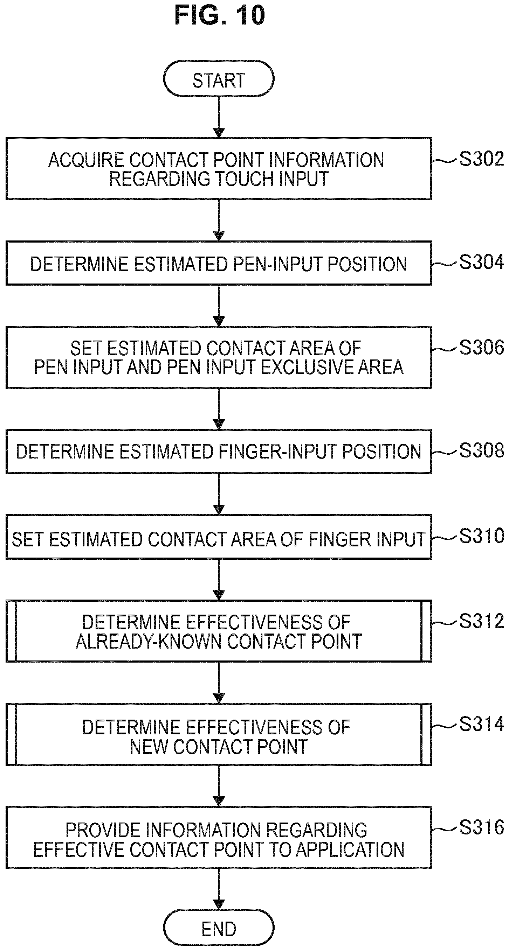

First, an overview of the processing performed by the information processing device 100-1 according to the present embodiment will be described with reference to FIG. 10. FIG. 10 is a flowchart conceptionally showing the overview of the processing performed by the information processing device 100-1 according to the present embodiment.

The information processing device 100-1 acquires contact point information regarding touch input (Step S302). Specifically, the touch input unit 106 newly generates contact point information regarding a new contact point and updates coordinate information of a contact point regarding already-known contact point information. Then, the input determination unit 108 acquires the generated or updated contact point information.

Then, the information processing device 100-1 determines an estimated pen-input position (Step S304). Specifically, the input position estimation unit 104 detects the pen 200-1 on the basis of an IR stereo image captured by the imaging unit 102 and determines the nib of the detected pen 200-1 as an estimated pen-input position.

Then, the information processing device 100-1 sets an estimated pen-input contact area and a pen input exclusive area regarding the estimated pen-input position (Step S306). Specifically, the input position estimation unit 104 sets an estimated pen-input contact area on the basis of the determined estimated pen-input position. Further, the input position estimation unit 104 sets a pen input exclusive area on the basis of a position of the detected pen 200-1.

Then, the information processing device 100-1 determines an estimated finger-input position (Step S308). Specifically, the input position estimation unit 104 detects a finger on the basis of the stereo image captured by the imaging unit 102 and determines a tip of the detected finger as an estimated finger-input position.

Then, the information processing device 100-1 sets an estimated finger-input contact area regarding the estimated finger-input position (Step S310). Specifically, the input position estimation unit 104 sets an estimated finger-input contact area on the basis of the determined estimated finger-input position.

Then, the information processing device 100-1 determines effectiveness of an already-known contact point (Step S312). Specifically, the input determination unit 108 determines effectiveness of an already-known contact point on the basis of contact point information regarding the already-known contact point among the pieces of the acquired contact point information. Details of the processing will be described below.

Then, the information processing device 100-1 determines effectiveness of a new contact point (Step S314). Specifically, the input determination unit 108 determines effectiveness of a new contact point on the basis of contact point information regarding the new contact point among the pieces of the acquired contact point information. Details of the processing will be described described below.

Then, the information processing device 100-1 provides information regarding an effective contact point to the application 110 (Step S316). Specifically, the input determination unit 108 provides, to the application 110, information regarding a contact point determined as an effective contact point between the already-known contact point and the new contact point. For example, the information regarding the contact point includes information such as coordinate information and attribute information of the contact point. Note that not only the information regarding the effective contact point but also information regarding an ineffective contact point may be provided to the application 110.

### (Processing regarding already-known contact point)

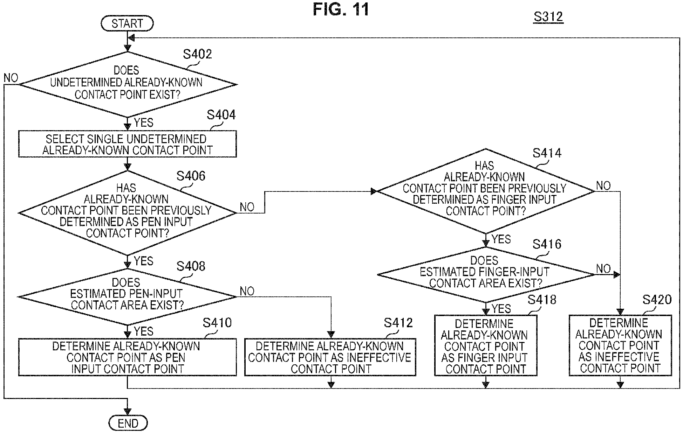

Next, processing regarding an already-known contact point will be described with reference to FIG. 11. FIG. 11 is a flowchart conceptionally showing the processing regarding the already-known contact point in the information processing device 100-1 according to the present embodiment.

The information processing device 100-1 determines presence/absence of an undetermined already-known contact point (Step S402). Specifically, the input determination unit 108 determines whether or not an already-known contact point whose effectiveness of the contact point has not been determined exists.

In a case where it is determined that an undetermined already-known contact point exists, the information processing device 100-1 selects a single undetermined already-known contact point (Step S404). Specifically, in a case where a plurality of undetermined already-known contact points exist, the input determination unit 108 selects one of the plurality of already-known contact points. In a case where there is a single undetermined already-known contact point, the single already-known contact point is selected.

Then, the information processing device 100-1 determines whether or not the already-known contact point has been previously determined as a pen input contact point (Step S406). Specifically, the input determination unit 108 determines whether or not an attribute of the selected already-known contact point is a pen input contact point.

In a case where it is determined that the already-known contact point has been previously determined as a pen input contact point, the information processing device 100-1 determines presence/absence of an estimated pen-input contact area (Step S408). Specifically, the input determination unit 108 determines whether or not an estimated pen-input contact area is set. Note that a plurality of estimated pen-input contact areas are set in some cases, and therefore the input determination unit 108 may determine presence/absence of an estimated pen-input contact area corresponding to the already-known contact point determined as the pen input contact point.

In a case where it is determined that the estimated pen-input contact area exists, the information processing device 100-1 determines the already-known contact point as the pen input contact point (Step S410). Specifically, in a case where the estimated pen-input contact area is set, the input determination unit 108 maintains the attribute of the already-known contact point.

In a case where it is determined that the estimated pen-input contact area does not exist, the information processing device 100-1 determines the already-known contact point as an ineffective contact point (Step S412). Specifically, in a case where the estimated pen-input contact area is not set, the input determination unit 108 changes the attribute of the already-known contact point to an ineffective contact point.

Further, in a case where it is determined in Step S406 that the already-known contact point has not been previously determined as the pen input contact point, the information processing device 100-1 determines whether or not the already-known contact point has been previously determined as a finger input contact point (Step S414). Specifically, in a case where it is determined that the attribute of the already-known contact point is not the pen input contact point, the input determination unit 108 determines whether or not the attribute of the already-known contact point is a finger contact point.

In a case where it is determined that the already-known contact point has been previously determined as the finger input contact point, the information processing device 100-1 determines presence/absence of an estimated finger-input contact area (Step S416). Specifically, in a case where it is determined that the attribute of the already-known contact point is the finger contact point, the input determination unit 108 determines whether or not an estimated finger-input contact area is set. Note that, as in the case of the estimated pen-input contact area, the input determination unit 108 may determine presence/absence of an estimated finger-input contact area corresponding to the already-known contact point determined as the finger input contact point.

In a case where it is determined that the estimated finger-input contact area exists, the information processing device 100-1 determines the already-known contact point as the finger input contact point (Step S418). Specifically, in a case where the estimated finger-input contact area is set, the input determination unit 108 maintains the attribute of the already-known contact point.

In a case where it is determined that the estimated finger-input contact area does not exist, the information processing device 100-1 determines the already-known contact point as an ineffective contact point (Step S420). Specifically, in a case where the estimated finger-input contact area is not set, the input determination unit 108 changes the attribute of the already-known contact point to an ineffective contact point.

### (Processing regarding new contact point)

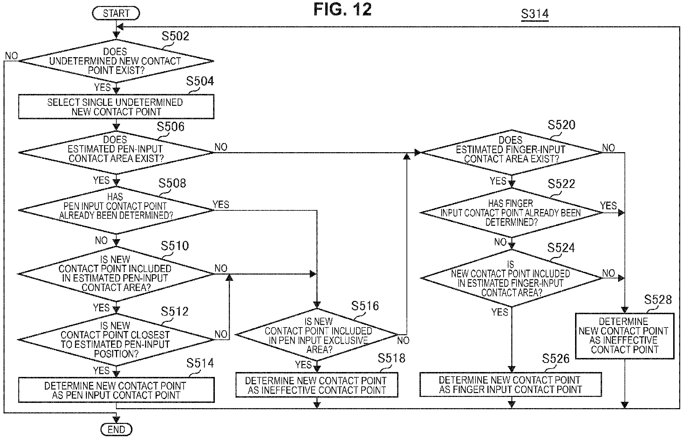

Next, processing regarding a new contact point will be described with reference to FIG. 12. FIG. 12 is a flowchart conceptionally showing the processing regarding the new contact point in the information processing device 100-1 according to the present embodiment.

The information processing device 100-1 determines presence/absence of an undetermined new contact point (Step S502). Specifically, the input determination unit 108 determines whether or not a new contact point whose effectiveness of the contact point has not been determined exists.

In a case where it is determined that an undetermined new contact point exists, the information processing device 100-1 selects a single undetermined new contact point (Step S504). Specifically, in a case where a plurality of undetermined new contact points exist, the input determination unit 108 selects one of the plurality of new contact points. In a case where there is a single undetermined new contact point, the single new contact point is selected.

Then, the information processing device 100-1 determines presence/absence of an estimated pen-input contact area (Step S506). Specifically, the input determination unit 108 determines whether or not an estimated pen-input contact area is set.

In a case where it is determined that the estimated pen-input contact area exists, the information processing device 100-1 determines whether or not a pen input contact point has already been determined (Step S508). Specifically, in a case where the estimated pen-input contact area is set, the input determination unit 108 determines presence/absence of another contact point whose attribute is a pen input contact point. Note that, in a case where a plurality of estimated pen-input contact areas are set, the input determination unit 108 determines, in each of all the estimated pen-input contact areas, presence/absence of a contact point whose attribute is the pen input contact point and which corresponds to the estimated pen-input contact area.

In a case where it is determined that the pen input contact point has not been determined yet, the information processing device 100-1 determines whether or not the new contact point is included in the estimated pen-input contact area (Step S510). Specifically, in a case where the contact point whose attribute is the pen input contact point does not exist, the input determination unit 108 determines whether or not the new contact point is included in the estimated pen-input contact area. Note that, in a case where a plurality of estimated pen-input contact areas are set, the input determination unit 108 determines, in each of all estimated pen-input contact areas in which the contact point whose attribute is the pen input contact point does not exist, whether or not the new contact point is included in the estimated pen-input contact area.

In a case where it is determined that the new contact point is included in the finger input contact area, the information processing device 100-1 determines whether or not the new contact point is a contact point closest to an estimated pen-input position (Step S512). Specifically, in a case where the new contact point is included in the estimated pen-input contact area, the input determination unit 108 determines whether or not the new contact point is closer to a two-dimensional position of an estimated pen-input position in the estimated pen-input contact area than any other contact points.

In a case where it is determined that the new contact point is a contact point closest to the estimated pen-input position, the information processing device 100-1 determines the new contact point as the pen input contact point (Step S514). Specifically, in a case where the new contact point is closer to the two-dimensional position of the estimated pen-input position in the estimated pen-input contact area than any other contact points, the input determination unit 108 sets the attribute of the new contact point as the pen input contact point.

Further, in a case where it is determined in Step S508 that the pen input contact point has already been determined, in a case where it is determined in Step S510 that the new contact point is not included in the estimated pen-input contact area, or in a case where it is not determined in Step S512 that the new contact point is closest to the two-dimensional position of the estimated pen-input position, the information processing device 100-1 determines whether or not the new contact point is included in a pen input exclusive area (Step S516). Specifically, the input determination unit 108 determines whether or not the new contact point is included in a pen input exclusive area.

In a case where it is determined that the new contact point is included in the pen input exclusive area, the information processing device 100-1 determines the new contact point as an ineffective contact point (Step S518). Specifically, in a case where the new contact point is included in the pen input exclusive area, the input determination unit 108 sets the attribute of the new contact point as an ineffective contact point.

Further, in a case where it is determined in Step S506 that the estimated pen-input contact area does not exist or in a case where it is determined in Step S516 that the new contact point is not included in the pen input exclusive area, the information processing device 100-1 determines presence/absence of an estimated finger-input contact area (Step S520). Specifically, the input determination unit 108 determines whether or not an estimated finger-input contact area is set.

In a case where it is determined that the estimated finger-input contact area exists, the information processing device 100-1 determines whether or not the finger input contact point has already been determined (Step S522). Specifically, in a case where the estimated finger-input contact area is set, the input determination unit 108 determines presence/absence of another contact point whose attribute is a finger input contact point. Note that, in a case where a plurality of estimated finger-input contact areas are set, the input determination unit 108 determines, in each of all the estimated finger-input contact areas, presence/absence of a contact point whose attribute is the finger input contact point and which corresponds to the estimated finger-input contact area.

In a case where it is determined that the estimated finger-input contact area has not been determined yet, the information processing device 100-1 determines whether or not the new contact point is included in the estimated finger-input contact area (Step S524). Specifically, in a case where the contact point whose attribute is the finger input contact point does not exist, the input determination unit 108 determines whether or not the new contact point is included in the estimated finger-input contact area. Note that, in a case where a plurality of estimated finger-input contact areas are set, the input determination unit 108 determines, in each of all estimated finger-input contact areas in which the contact point whose attribute is the finger input contact point does not exist, whether or not the new contact point is included in the estimated finger-input contact area.

In a case where it is determined that the new contact point is included in the estimated finger-input contact area, the information processing device 100-1 determines the new contact point as the finger input contact point (Step S526). Specifically, in a case where it is determined that the new contact point is included in the estimated finger-input contact area, the input determination unit 108 sets the attribute of the new contact point as the finger input contact point.

Further, in a case where it is determined in Step S520 that the estimated finger-input contact area does not exist, in a case where it is determined in Step S522 that the finger input contact point has already been determined, or in a case where it is determined in Step S524 that the new contact point is not included in the estimated finger-input contact area, the information processing device 100-1 determines the new contact point as an ineffective contact point (Step S528). Specifically, the input determination unit 108 sets the attribute of the new contact point as an ineffective contact point.

### <2-3. Conclusion of first embodiment>

As described above, according to the first embodiment of the present disclosure, the information processing device 100-1 controls processing based on input based on an approach of the operation body on the basis of information regarding a detected position of the input based on a detection result of the input and information regarding a position (estimated position) of the operation body estimated by using image information obtained by capturing an image in which the operation body serves as a subject. Therefore, because the processing based on the input is executed on the basis of not only the detection result of the input based on the approach of the operation body but also the image in which the operation body appears, it is possible to improve accuracy of the processing, as compared to a case where only the detection result of the input based on the approach of the operation body is used. Thus, it is possible to cause processing that meets intention of the user who operates input to be performed. Further, according to the present embodiment, an input position of the operation body that is currently operated is estimated, and therefore it is possible to select input that is a target to be processed and is based on operation that is actually performed. Thus, even in a case where the user performs operation in different forms every time, it is possible to cause the application 110 and the like to perform processing based on input intended by the user.

Further, the above-mentioned estimated position includes a position that is not close to the detection surface of the above-mentioned input. Herein, processing of the captured image is slower than detection processing of touch input, and therefore a time lag is generated between a point of time at which touch input is detected and a point of time at which image processing is completed in some cases. For example, an image used in an image processing result obtained at a point of time at which touch input is detected is an image captured before the touch input is detected in some cases. In such a case, if a position of the operation body that is in a state in which input is actually performed is estimated, the position of the operation body is not estimated at a point of time at which the touch input is detected. Therefore, a time lag is generated between detection of the touch input and estimation of the position of the operation body. On the contrary, according to the present configuration, generation of the time lag is restrained, and therefore it is possible to restrain reduction in operability caused by the time lag.

Further, the information processing device 100-1 controls a position of the above-mentioned processing in accordance with whether or not the above-mentioned estimated position corresponds to the above-mentioned detected position. Therefore, even in a case where a plurality of estimated positions exist, an estimated position whose two-dimensional position corresponds to the detected position is selected. Thus, it is possible to restrain a detected position that is not intended by the user from being determined as the position of the processing. This makes it possible to restrain generation of processing against the user's intention.

Further, whether or not the above-mentioned estimated position corresponds to the detected position is determined on the basis of whether or not the detected position is included in an estimated area including the estimated position. Herein, it is difficult to secure precision and accuracy of the estimated position in some cases depending on an environment or situation in which input is performed. In such a case, when correspondence between the estimated position and the detected position is strictly demanded, the detected position is hardly determined as the position of the processing. This may reduce operability. On the contrary, according to the present configuration, a shift between the detected position and the estimated position is allowed within a predetermined range, and therefore the processing tends to be performed in accordance with the user's intention. This makes it possible to improve operability.

Further, the above-mentioned operation body includes an object operated by the user, and the information processing device 100-1 controls the position of the above-mentioned processing regarding the above-mentioned input detected in the vicinity of the object operated by the user in accordance with whether or not the operation body is an object operated by the user. Herein, when input is performed with the pen 200-1, a hand holding the pen 200-1 tends to be brought into contact with the detection surface, and therefore input tends to be erroneously determined. Meanwhile, in a case where operation is performed by using the pen 200-1, operation using a finger of the hand holding the pen 200-1 is hardly performed. Regarding this, according to the present configuration, a position of a finger detected in the vicinity of the pen 200-1 is not selected as the position of the processing. Therefore, input based on a contact of the hand holding the pen 200-1 to the detection surface is restrained from being erroneously determined. This makes it possible to further restrain generation of processing that is not intended by the user.

Further, the above-mentioned operation body includes a hand or finger of the user. Therefore, the user can perform intuitive input operation. Further, it possible to improve operation efficiency by combining operation with the pen 200-1 and operation with a finger.

Further, the information processing device 100-1 controls the above-mentioned position of the processing on the basis of a positional relationship between the above-mentioned estimated position and the detection surface of the above-mentioned input. Therefore, even in a case where an object other than the operation body is arranged on the detection surface and the operation body is positioned above or in the vicinity of the object, it is possible to restrain processing from being performed on the basis of a contact point of the object.

### <2-4. Modification example>

Hereinabove, the first embodiment of the present disclosure has been described. Note that the present embodiment is not limited to the above-mentioned example. Hereinafter, a modification example of the present embodiment will be described.

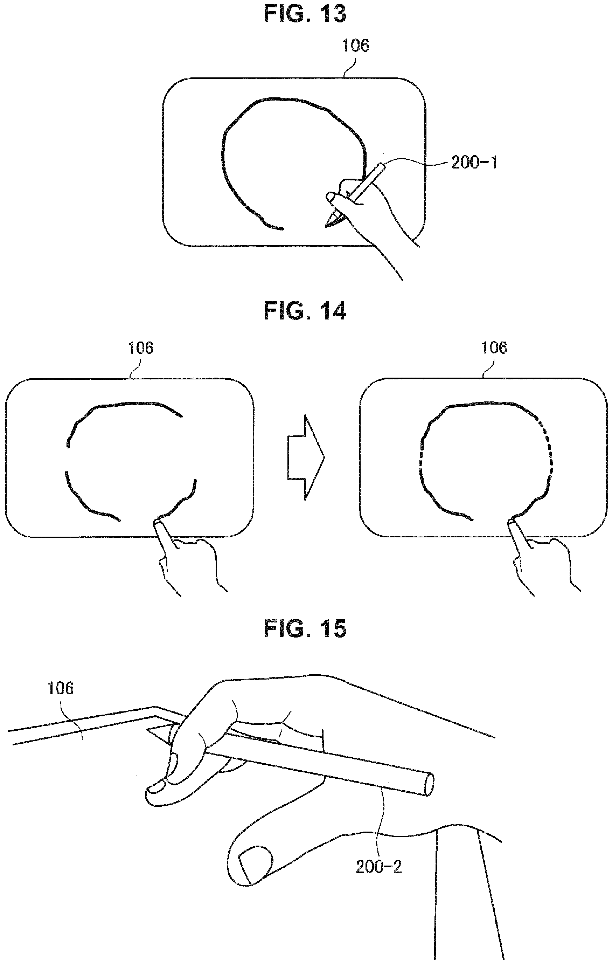

As the modification example of the present embodiment, the information processing device 100-1 may interpolate input at a position at which input is not detected. First, a case where interpolation of input is useful will be described with reference to FIGS. 13 and 14. FIG. 13 is a diagram illustrating an example of input with the pen 200-1, and FIG. 14 is a diagram illustrating an example of input with a finger and an example of input interpolation.

In a case where the touch input unit 106 is a pressure-sensitive sensor, how to contact is generally different depending on the type of the operation body. For example, a shape, an area, pressing force, or the like of a contact point is different depending on the type of the operation body. Therefore, when a detection parameter is set in accordance with any one of operation bodies, input with other operation bodies is hardly detected in some cases.

For example, there will be described a case where the detection parameter is set in accordance with the pen 200-1. In this case, as illustrated in FIG. 13, when the user operates the pen 200-1 to draw a circle, input with the pen 200-1 is continuously detected as a circular shape.

Meanwhile, there will be described a case where input with a finger is performed while the detection parameter for the pen 200-1 is still set. In this case, when the user operates his/her finger to draw a circle as in the case of input with the pen 200-1, the input with the finger is detected as a partially discontinuous shape in some cases as illustrated in a left drawing of FIG. 14. One of reasons for this is that pressing force of input with the finger is smaller than that of input with the pen 200-1. Specifically, a detection threshold is set in accordance with pressing force of the pen 200-1, and therefore input with the finger whose pressing force is smaller than that of the pen 200-1 tends to have pressing force below the detection threshold. As a result, detected input is discontinuous as illustrated in the left drawing of FIG. 14.

In view of this, in the present modification example, in a case where input is intermittently detected, the information processing device 100-1 determines a position of processing based on input on the basis of an estimated position at an interval between detected positions and the detected positions. Specifically, the input determination unit 108 estimates a shape of a series of input on the basis of a two-dimensional position of an estimated position obtained from the input position estimation unit 104. Then, the input determination unit 108 specifies a part of the estimated shape of the series of input to which no contact point corresponds on the basis of contact point information obtained from the touch input unit 106. Then, the input determination unit 108 determines a position corresponding to the part of the shape to which no contact point corresponds as a position of processing based on input. For example, a position indicated by a dotted line in a right drawing of FIG. 14 is added as an effective contact point.

As described above, according to the modification example of the present embodiment, in a case where input is intermittently detected, the information processing device 100-1 determines a position of processing based on input on the basis of an estimated position at an interval between detected positions and the detected positions. Therefore, because a detected position is interpolated on the basis of a track of a two-dimensional position of the estimated position, it is possible to achieve input intended by the user. Further, it is possible to maintain operability without changing a detection parameter between a case where the pen 200-1 is used and a case where a finger is used. Thus, operation such as switching of the detection parameter is omitted. This makes it possible to improve convenience.

Note that the information processing device 100-1 may change a detection parameter in accordance with the type of the operation body. For example, the input position estimation unit 104 determines the type of the operation body on the basis of an image captured by the imaging unit 102 and transmits a determination result as notification to a touch input control unit 140 described below. Then, the touch input control unit 140 sets a detection parameter in accordance with the determined type of the operation body. In this case, it is possible to save time and effort in the user setting a detection parameter. Note that, even in a case where an appropriate detection parameter is individually set in accordance with the type of the operation body as in the present configuration, detected input may be discontinuous. Therefore, the above-mentioned input interpolation function of the present modification example is still useful.

### <3. Second embodiment (processing based on posture of pen)>

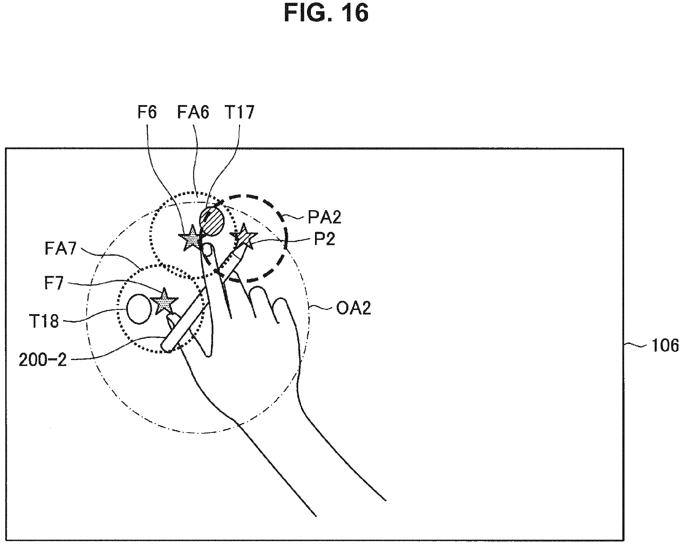

Hereinabove, the information processing device 100-1 according to the first embodiment of the present disclosure has been described. Next, an information processing device 100-2 according to a second embodiment of the present disclosure will be described. First, a background of the second embodiment will be described with reference to FIGS. 15 and 16. FIG. 15 is a diagram illustrating an example of input operation with a finger of a hand holding a pen 200-2, and FIG. 16 is a diagram illustrating an example of processing performed in a case where input operation with a finger of a hand holding the pen 200-2 is not considered.

Both input with the pen 200-2 and input with a finger are allowed in the information processing device 100. In such a case, it is expected that the hand holding the pen 200-2 performs input with the pen 200-2 and the other hand performs input with a finger. However, actually, input with a finger is performed by the hand holding the pen 200-2 in some cases. For example, as illustrated in FIG. 15, input is performed by using other fingers while the pen 200-2 is being gripped by the finger.

When such input with the fingers of the hand holding the pen 200-2 is not considered, input may be erroneously determined. For example, as illustrated in FIG. 16, in a case where input is performed with a first finger and a thumb while the pen 200-2 is being gripped, estimated finger-input positions F6 and F7 are determined, and estimated finger-input contact areas FA6 and FA7 are set. Therefore, a contact point T17 included in the estimated finger-input contact area FA6 and a contact point T18 included in the estimated finger-input contact area FA7 seem to be determined as finger input contact points, respectively.

However, the pen 200-2 also appears in an image, and therefore an estimated pen-input position P2 of the input with the pen 200-2 is determined, and an estimated pen-input contact area PA2 and a pen input exclusive area OA2 are set. Therefore, the contact point T17 is included in the estimated pen-input contact area PA2 and is therefore determined as a pen input contact point, and a contact point T18 is not included in the estimated pen-input contact area PA2 but is included in the pen input exclusive area OA2 and is therefore determined as an ineffective contact point. As a result, processing based on input with the fingers, which is intended by the user, is not performed, and, conversely, processing based on input with the pen 200-2, which is not intended by the user, is performed.

In view of this, in a case where the operation body is an object operated by the user, for example, a pen-shaped object, the information processing device 100-2 according to the second embodiment of the present disclosure controls a position of processing regarding input with the pen-shaped object on the basis of a posture of the pen-shaped object. With this, the above-mentioned input with the fingers of the hand holding the pen 200-2 can be processed as the user intends. Hereinafter, details of the information processing device 100-2 will be described.

### <3-1. Configuration of device>

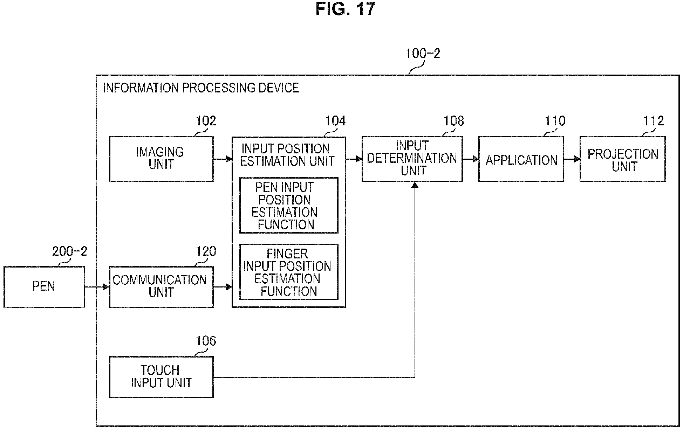

First, a functional configuration of the information processing device 100-2 according to the second embodiment of the present disclosure will be described with reference to FIG. 17. FIG. 17 is a block diagram illustrating an example of a schematic functional configuration of the information processing device 100-2 according to the second embodiment of the present disclosure. Note that description of a functional configuration substantially the same as the functional configuration according to the first embodiment will be omitted.

As illustrated in FIG. 17, the information processing device 100-2 includes a communication unit 120 in addition to the imaging unit 102, the input position estimation unit 104, the touch input unit 106, the input determination unit 108, the application 110, and the projection unit 112.

### (Communication unit)

The communication unit 120 communicates with the pen 200-2. Specifically, the communication unit 120 receives information in which a posture of the pen 200-2 is specified (hereinafter, also referred to as "posture information") from the pen 200-2. For example, the communication unit 120 communicates with the pen 200-2 by using a wireless communication method such as Bluetooth (registered trademark) or Wi-Fi (registered trademark). Note that the communication unit 120 may communicate with the pen 200-2 by a wired communication method.

### (Input position estimation unit)

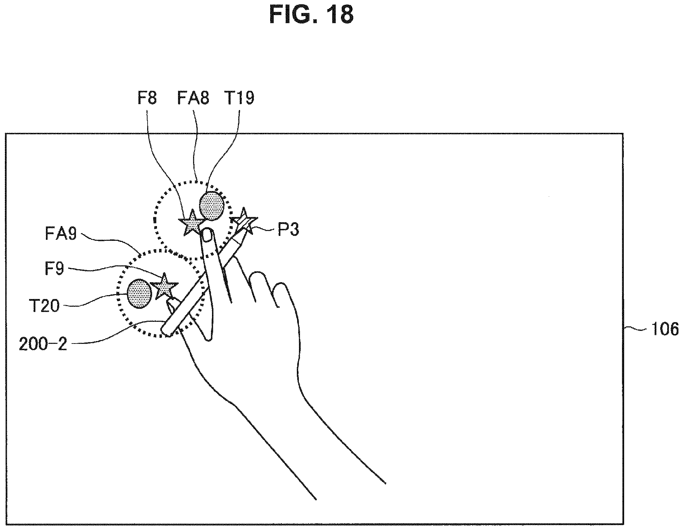

The input position estimation unit 104 controls processing regarding an estimated position on the basis of posture information of the pen 200-2. Specifically, in a case where the operation body is a pen-shaped object, the input position estimation unit 104 controls processing regarding an estimated position of the pen-shaped object on the basis of a posture of the pen-shaped object. The processing regarding the estimated position based on posture information will be described in detail with reference to FIG. 18. FIG. 18 is a diagram illustrating an example of a user's input operation in this embodiment.

First, the input position estimation unit 104 detects the operation body on the basis of an image captured by the imaging unit 102. For example, the input position estimation unit 104 detects the pen 200-2 and a finger on the basis of the obtained image.

Then, the input position estimation unit 104 determines whether or not the detected operation body is a pen-shaped object. For example, the input position estimation unit 104 determines whether or not the detected operation body is the pen 200-2.

In a case where it is determined that the operation body is the pen 200-2, the input position estimation unit 104 determines whether to determine an estimated pen-input position on the basis of posture information provided from the communication unit 120. For example, when the pen 200-2 is detected, the input position estimation unit 104 calculates an inclination of the pen 200-2 from the detection surface on the basis of the posture information provided from the communication unit 120. In a case where the calculated inclination is equal to or smaller than a predetermined angle, the input position estimation unit 104 determines that an input position of the pen 200-2 is not estimated. In other words, it is determined that determination processing of an estimated pen-input position of the pen 200-2 is not performed.

Then, the input position estimation unit 104 determines the estimated position of the detected operation body. Specifically, the input position estimation unit 104 performs determination processing of an estimated finger-input position of the detected finger. Note that, regarding the pen 200-2 that is determined as the estimated pen-input position not being determined in the above description, the determination processing of the estimated pen-input position is not performed. For example, as illustrated in FIG. 18, estimated finger-input positions F8 and F9 are determined and the estimated pen-input position of the pen 200-2 is not determined.

Then, the input position estimation unit 104 determines an estimated contact area of the estimated position. For example, the input position estimation unit 104 sets estimated finger-input contact areas FA8 and FA9 regarding the determined estimated finger-input positions F8 and F9, respectively, as illustrated in FIG. 18. Note that the estimated pen-input position of the pen 200-2 is not determined, and therefore an estimated pen-input contact area and a pen input exclusive area are not set.

Therefore, contact points T19 and T20 illustrated in FIG. 18 are determined as finger input contact points in processing performed by the input determination unit 108. As a result, processing is performed on the basis of input with a finger intended by the user. Thus, the user can perform input also with a finger of the hand holding the pen 200-2. This makes it possible to improve operability, which results in improvement in operation efficiency.

### (Pen)

Note that a functional configuration of the pen 200-2 will also be described. Although not illustrated, the pen 200-2 includes a sensor for detecting the posture of the pen 200-2 and a communication module for communicating with the information processing device 100-2.

The sensor detects the posture of the pen 200-2. For example, the sensor is an angular velocity sensor or acceleration sensor. Further, the communication module transmits posture information in which the posture detected by the sensor is specified to the information processing device 100-2. Note that the posture information may be updated at predetermined time intervals and may be transmitted to the information processing device 100-2 every time when update is performed.

### <3-2. Conclusion of second embodiment>

As described above, according to the second embodiment of the present disclosure, in a case where the operation body is an object operated by the user, the information processing device 100-2 controls a position of processing regarding input with the object operated by the user on the basis of a posture of the object operated by the user. Therefore, processing regarding an estimated position of input with the pen 200-2 that is not used as an operation body is not performed, and thus it is possible to avoid erroneous determination of input. Accordingly, the above-mentioned input with a finger of the hand holding the pen 200-2 can be processed as the user intends.

Further, information in which the posture of the above-mentioned object operated by the user is specified is obtained via communication. Therefore, the information processing device 100-2 does not need to include a configuration for specifying the posture of the pen 200-2. This makes it possible to reduce a processing load and costs.

Note that, although an example where the posture information is obtained via communication has been described in the present embodiment, the posture information may be generated in the information processing device 100-2. For example, the input position estimation unit 104 may estimate the posture of the pen 200-2 on the basis of an image in which the pen 200-2 appears and which is captured by the imaging unit 102 and may generate posture information regarding the estimated posture. In this case, a pen that does not include a sensor for detecting a posture or a communication module for transmitting posture information can be used in the information processing device 100-2. Thus, the user can freely select the pen 200-2. Further, there is a possibility that precision of the posture information is improved, as compared to a case where the posture information obtained from the sensor is used. This makes it possible to improve accuracy of processing based on input.

### <3-3. Modification example>

Hereinabove, the second embodiment of the present disclosure has been described. Note that the present embodiment is not limited to the above-mentioned example. Hereinafter, a modification example of the present embodiment will be described.

As the modification example of the present embodiment, the information processing device 100-2 may interpolate an estimated position by using posture information of the pen 200-2. Herein, an IR marker mounted on the pen 200-2 is hidden by a hand holding the pen 200-2, a penholder of the pen 200-2, or the like and does not appear in an image in some cases. Such a phenomenon is also referred to as "occlusion". In this case, the input position estimation unit 104 cannot determine an estimated pen-input position of the pen 200-2, and, even in a case where input is actually continued, a contact point of the input is determined as an ineffective contact point and processing based on the input is stopped.

In view of this, the input position estimation unit 104 determines a current estimated position on the basis of posture information and a past estimated position. Specifically, the input position estimation unit 104 calculates a rotation amount or moving amount of the pen 200-2 on the basis of posture information such as angular velocity information or acceleration information and determines a current estimated position on the basis of an estimated position that has been previously determined and the calculated rotation amount or moving amount. Note that, in a case where the determined current estimated position is out of the detection surface, termination of input operation may be determined.

As described above, according to the modification example of the present embodiment, the information processing device 100-2 determines a current estimated position on the basis of posture information and a past estimated position. Therefore, even in a case where the above-mentioned occlusion occurs, it is possible to prevent input from being discontinuous by estimating a rough position of the pen 200-2. Thus, how the user uses the pen 200-2 is not limited, and it is possible to maintain operability of the pen 200-2.

### <4. Third embodiment (determination of plurality of simultaneous inputs)>

Hereinabove, the information processing device 100-2 according to the second embodiment of the present disclosure has been described. Next, an information processing device 100-3 according to a third embodiment of the present disclosure will be described. The information processing device 100-3 according to the present embodiment has a determination function of simultaneous inputs (hereinafter, also referred to as "multi-touch") with a plurality of operation bodies.

### <4-1. Configuration of device>

First, a functional configuration of the information processing device 100-3 according to the third embodiment of the present disclosure will be described. Note that the configuration of the information processing device 100-3 is substantially the same as the configuration of the information processing device 100-1 or 100-2, and therefore description thereof will be omitted, and only functions different from the functions of the information processing devices 100-1 and 100-2 will be described.

### (Input determination unit)

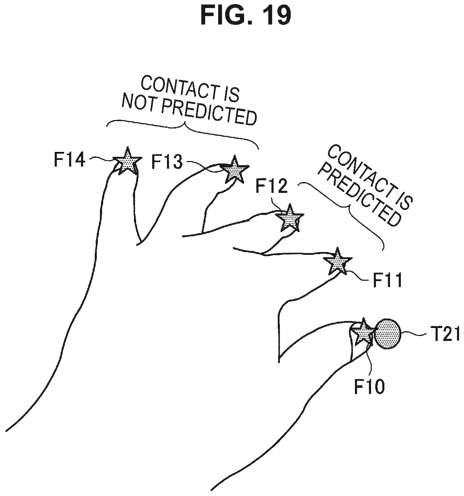

The input determination unit 108 performs input determination of the above-mentioned multi-touch. Specifically, the input determination unit 108 controls a position of processing regarding a second operation body other than a first operation body at an estimated position corresponding to a detected position on the basis of a positional relationship between the second operation body and the detection surface of input. Note that the second operation body and the first operation body may be the same type of operation body. For example, in a case where the first operation body is a thumb, the second operation body may be another finger (a first finger, a second finger, a third finger, or a fourth finger) other than the thumb. Further, as a matter of course, the first operation body and the second operation body may be different types of operation bodies. Furthermore, input determination processing of multi-touch will be described in detail with reference to FIG. 19. FIG. 19 is a diagram illustrating an example of multi-touch operation.

The input determination unit 108 performs contact point determination processing regarding a detected contact point. For example, the input determination unit 108 performs the contact point determination processing described in the first embodiment. As a result, for example, in a case where the user attempts to perform multi-touch using the thumb, the first finger, and the second finger, a contact point T21 illustrated in FIG. 19 is determined as a finger input contact point at an estimated finger-input position F10 of the thumb (first operation body).

Then, the input determination unit 108 calculates a distance Dt between the detection surface and an estimated position of the contact point determined as an effective contact point. For example, the input determination unit 108 acquires a Z-axis coordinate of the estimated finger-input position F10 of the contact point T21 determined as an effective contact point and calculates the distance Dt from the detection surface. This is because, even in a case where a contact point is determined as an effective contact point, an estimated position of the contact point is not necessarily in contact with the detection surface because of the above-mentioned time lag.

Then, the input determination unit 108 calculates a distance Di between the detection surface and a second estimated position other than a first estimated position of the contact point determined as the effective contact point. For example, the input determination unit 108 acquires Z-axis coordinates of respective estimated finger-input positions F11 to F14 of the first finger and the second finger (second operation bodies) other than the estimated finger-input position F10 illustrated in FIG. 19 and calculates distances D11 to D14 from the detection surface.

Then, the input determination unit 108 determines that the another estimated position at which the calculated distance Di is equal to or smaller than the sum of the distance Dt and a predetermined distance Δ is a multi-touch effective contact point accompanying the effective contact point. For example, the input determination unit 108 determines that the estimated finger-input positions F11 and F12 having a distance equal to or smaller than (Dt + Δ) among the calculated distances D11 to D14 are multi-touch effective contact points accompanying the effective contact point T21 as estimated positions at which contact is predicted. Note that the estimated finger-input positions F13 and F14 are determined as estimated positions at which contact is not predicted and are not determined as multi-touch effective contact points.

Then, the input determination unit 108 determines the number of simultaneous inputs of multi-touch on the basis of the number of contact points determined as the multi-touch effective contact points. For example, the input determination unit 108 determines the number obtained by adding 1 to the number of multi-touch effective contact points as the number of simultaneous inputs of multi-touch.

Note that, although an example of multi-touch with one hand has been described in the above description, multi-touch may be performed with both hands. Further, although multi-touch input with fingers has been described in the above description, the multi-touch input may be multi-touch input with a pen 200-3, and both input with fingers and input with the pen 200-3 may be performed. Further, the above-mentioned predetermined distance Δ may have a value set in advance or may be changed.

### <4-2. Processing of device>

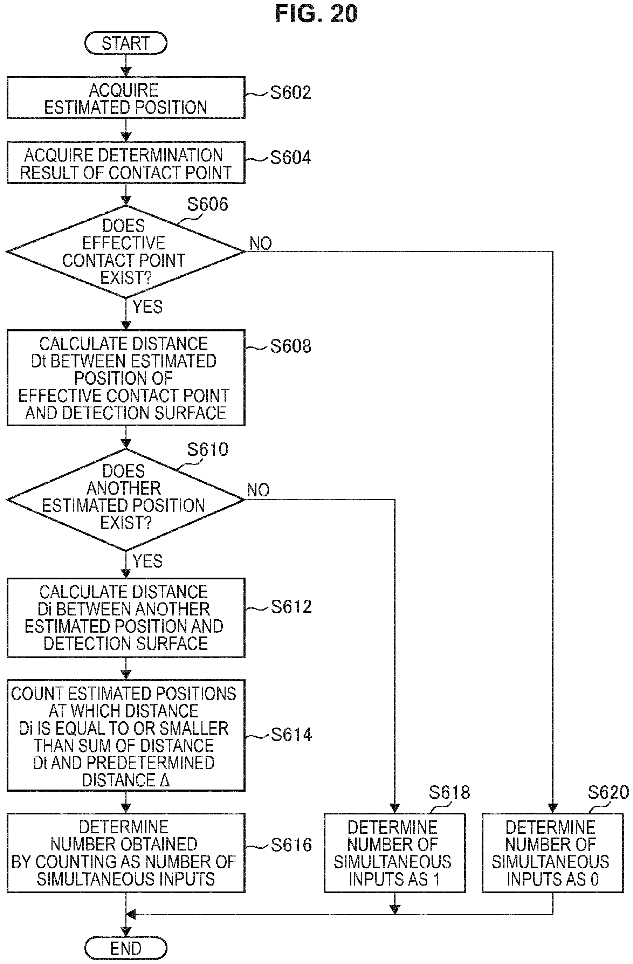

Next, input determination processing of multi-touch will be described with reference to FIG. 20. FIG. 20 is a flowchart conceptionally showing the input determination processing of multi-touch in the information processing device 100-3 according to the present embodiment.

The information processing device 100-3 acquires an estimated position (Step S602). Specifically, the input determination unit 108 acquires an estimated position determined by the input position estimation unit 104.

Then, the information processing device 100-3 acquires a determination result of a contact point (Step S604). Specifically, the input determination unit 108 acquires a result of the above-mentioned contact point determination processing. Note that the contact point determination processing may be performed in the step.

Then, the information processing device 100-3 determines presence/absence of an effective contact point (Step S606). Specifically, the input determination unit 108 determines presence/absence of an effective contact point on the basis of the determination result of the contact point.

In a case where it is determined that the effective contact point exists, the information processing device 100-3 calculates a distance Dt between an estimated position of the effective contact point and the detection surface (Step S608). Specifically, in a case where the effective contact point exists, the input determination unit 108 calculates a distance Dt on the Z axis between an estimated position of the effective contact point and the detection surface of the touch input unit 106.

Then, the information processing device 100-3 determines presence/absence of another estimated position (Step S610). Specifically, the input determination unit 108 determines presence/absence of another estimated position other than the estimated position of the effective contact point.

In a case where it is determined that another estimated position other than the effective contact point exists, the information processing device 100-3 calculates a distance Di between the another estimated position and the detection surface (Step S612). Specifically, in a case where the another estimated position exists, the input determination unit 108 calculates a distance Di on the Z axis between the another estimated position and the detection surface. Note that, in a case where there are a plurality of other estimated positions, distances Di from all the other estimated positions are calculated.

Then, the information processing device 100-3 counts estimated positions at which the distance Di is equal to or smaller than the sum of the distance Dt and a predetermined distance Δ (Step S614). Specifically, the input determination unit 108 counts estimated positions having the distance Di that satisfies Di < (Dt + A).

Then, the information processing device 100-3 determines the number obtained by counting as the number of simultaneous inputs (Step S616). Specifically, the input determination unit 108 determines the number obtained by counting as the number of simultaneous inputs in multi-touch.

In a case where it is determined in Step S610 that another estimated position does not exist, the information processing device 100-3 determines the number of simultaneous inputs as 1 (Step S618). Specifically, the input determination unit 108 determines the number of simultaneous inputs in multi-touch as 1. Note that the processing may be performed by determining that there is no simultaneous input.

Further, in a case where it is determined in Step S606 that the effective contact point does not exist, the information processing device 100-3 determines the number of simultaneous inputs as 0 (Step S620). Specifically, the input determination unit 108 determines the number of simultaneous inputs in multi-touch as 0. Note that the processing may be performed by determining that there is no input.

### <4-3. Conclusion of third embodiment>

As described above, according to the third embodiment of the present disclosure, the information processing device 100-3 controls a position of processing regarding a second operation body other than an operation body at a first estimated position corresponding to a detected position on the basis of a positional relationship between the second operation body and the detection surface of input. Herein, in simultaneous inputs with a plurality of operation bodies, i.e., multi-touch, which is a form of input operation, it is desirable to simultaneously detect intended inputs. However, in some cases, detection timings of inputs are shifted between a plurality of operation bodies regarding the intended inputs. In that case, processing may not be performed as multi-touch. On the contrary, according to the present embodiment, an operation body that is predicted to be brought into contact immediately after a contact is determined as being in contact, and therefore a shift between detection timings of inputs is interpolated. This makes it possible to improve operability of multi-touch.

### <5. Fourth embodiment (setting of effective detection area of touch input)>

Hereinabove, the information processing device 100-3 according to the third embodiment of the present disclosure has been described. Next, an information processing device 100-4 according to a fourth embodiment of the present disclosure will be described. The information processing device 100-4 according to the present embodiment has a function of controlling an input detection function of the touch input unit 106.

### <5-1. Configuration of device>

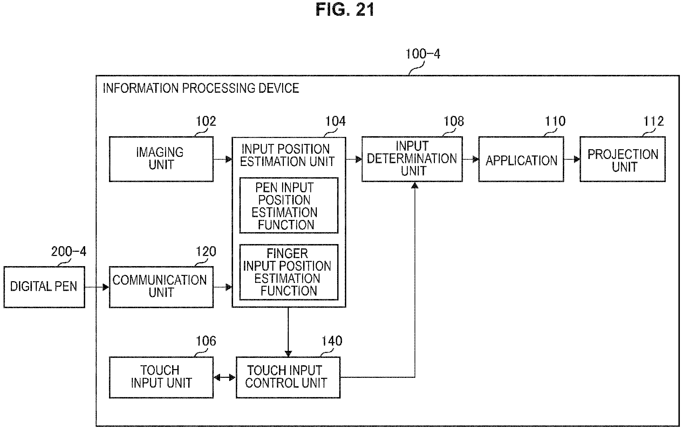

First, a functional configuration of the information processing device 100-4 according to the fourth embodiment of the present disclosure will be described with reference to FIG. 21. FIG. 21 is a block diagram illustrating an example of a schematic functional configuration of the information processing device 100-4 according to the fourth embodiment of the present disclosure. Note that description of the functional configuration substantially the same as the functional configurations according to the first to third embodiments will be omitted.

As illustrated in FIG. 21, the information processing device 100-4 includes the touch input control unit 140 in addition to the imaging unit 102, the input position estimation unit 104, the touch input unit 106, the input determination unit 108, the application 110, the projection unit 112, and the communication unit 120.

### (Touch input unit)

The touch input unit 106 detects input on the basis of a detection parameter that is set by the touch input control unit 140. Specifically, the touch input unit 106 detects input only in a detection area (hereinafter, also referred to as "effective detection area") which is set by the touch input control unit 140. For example, the touch input unit 106 is suitable for a detection parameter that is set in the unit of input detection cycle. Note that the detection parameter may be not only a size or shape of the effective detection area but also detection sensitivity of input or the like in the effective detection area.

### (Touch input control unit)

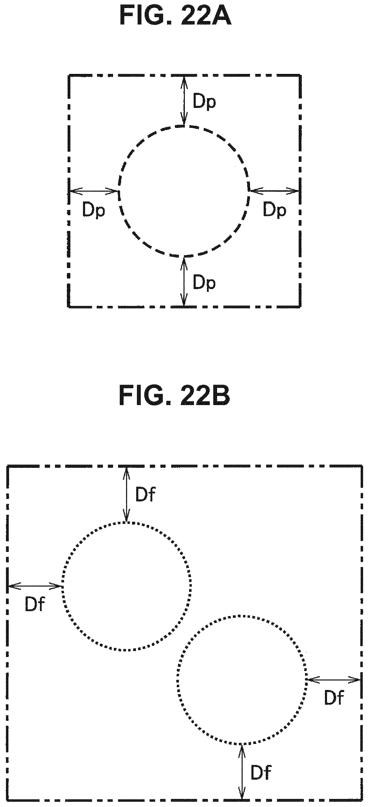

The touch input control unit 140, which serves as a part of the control unit, controls the input detection function of the touch input unit 106. Specifically, the touch input control unit 140 sets an effective detection area so that the effective detection area includes a two-dimensional position of an estimated position. Further, the effective detection area will be described in detail with reference to FIGS. 22A and 22B. FIG. 22A is a diagram illustrating an example of an effective detection area that is set on the basis of a two-dimensional position of a single estimated position, and FIG. 22B is a diagram illustrating an example of effective detection areas that are set on the basis of two-dimensional positions of a plurality of estimated positions.

The touch input control unit 140 sets an effective detection area on the basis of a two-dimensional position of an estimated position. Specifically, the touch input control unit 140 sets an effective detection area on the basis of a distance from an estimated contact area regarding the estimated position. For example, as illustrated in FIG. 22A, an area in which a distance obtained by adding a predetermined distance Dp to both right and left portions in a horizontal direction (X-axis direction) of an estimated pen-input contact area is determined as a horizontal length and a distance obtained by adding the predetermined distance Dp to both upper and lower portions in a vertical direction (Y-axis direction) of the estimated pen-input contact area is determined as a vertical length is set as the effective detection area.

Further, in a case where estimated contact areas are adjacent to each other, the touch input control unit 140 sets an effective detection area including the whole or part of the adjacent estimated contact areas. For example, as illustrated in FIG. 22B, an area in which a distance obtained by adding a predetermined distance Df to an upper left estimated finger-input contact area in a vertically upward direction and adding the predetermined distance Df to a lower right estimated finger-input contact area in a vertically downward direction is determined as a vertical length and a distance obtained by adding the predetermined distance Df to the upper left estimated finger-input contact area in a horizontal leftward direction and adding the distance Df to the lower right estimated finger-input contact area in a horizontal rightward direction is determined as a horizontal backward length is set as the effective detection area.

Note that, although an example where the effective detection area has a rectangular shape has been described in FIGS. 22A and 22B, the shape of the effective detection area is not limited thereto and has an arbitrary shape. For example, the effective detection area may have a circular shape, an oval shape, another curved shape, a polygonal shape other than the rectangular shape, or the like.

Further, the touch input control unit 140 controls the touch input unit 106 so that input is detected only in the effective detection area. Specifically, the touch input control unit 140 causes the touch input unit 106 to set a detection range of input as an effective detection area to be set. As a result, input is detected only within the range of the effective detection area, and therefore a position of processing is controlled on the basis of a detected position included in the effective detection area and an estimated position.

Note that the touch input control unit 140 may apply the effective detection area to a detection result of input obtained from the touch input unit 106. Specifically, the touch input control unit 140 provides a detection result of, among obtained detected positions of input, only a detected position included in the effective detection area to the input determination unit 108. In this case, even in a case where the touch input unit 106 does not have a function of changing a detection area, it is possible to set only the detected position in the effective detection area as a detected position for use in processing performed by the input determination unit 108. Thus, throughput of the input determination unit 108 is reduced. This makes it possible to reduce a processing load of the input determination unit 108.

Further, the touch input control unit 140 may set different detection parameters for effective detection areas in accordance with the type of the operation body. Specifically, the detection parameter is not only the above-mentioned size or shape of the effective detection area but also detection sensitivity of input or the like in the effective detection area. For example, the predetermined distance Dp in the effective detection area of the estimated pen-input contact area illustrated in FIG. 22A and the predetermined distance Df in the effective detection area of the estimated finger-input contact area illustrated in FIG. 22B are set to have different lengths.

### <5-2. Processing of device>

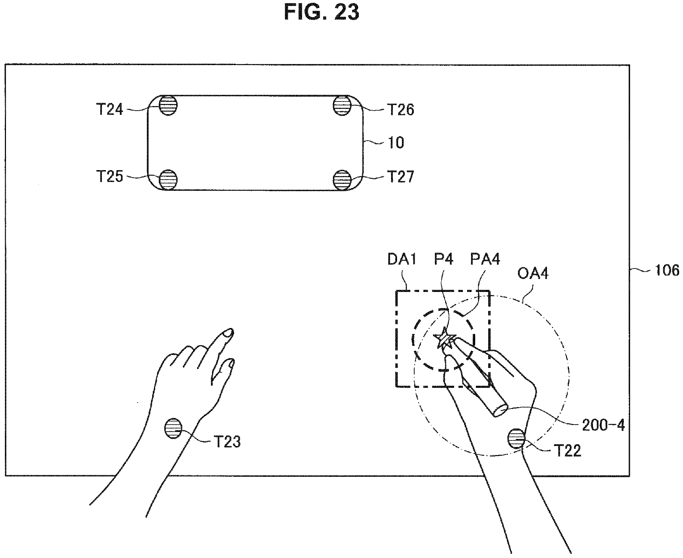

Next, processing performed by the information processing device 100-4 will be described with reference to FIGS. 23 to 26. FIGS. 23 to 26 are diagrams illustrating processing performed by the information processing device 100-4 according to the present embodiment.

First, processing before input with an operation body will be described with reference to FIG. 23. For example, the user brings his/her right hand holding a pen 200-4 and his/her left hand holding nothing to a part above the detection surface of the touch input unit 106. Note that the pen 200-4 and fingers are not in contact with the detection surface but bases of both the hands are in contact with the detection surface. Further, the object 10 is arranged on the detection surface.

In this case, the input position estimation unit 104 determines an estimated pen-input position P4 of the pen 200-4 on the basis of a captured image and sets an estimated pen-input contact area PA4 and a pen input exclusive area OA4. Then, the touch input control unit 140 sets an effective detection area DA1 on the basis of the set estimated pen-input contact area PA4. Therefore, input is not detected at contact points T22 to T27 that are not included in the effective detection area DA1.

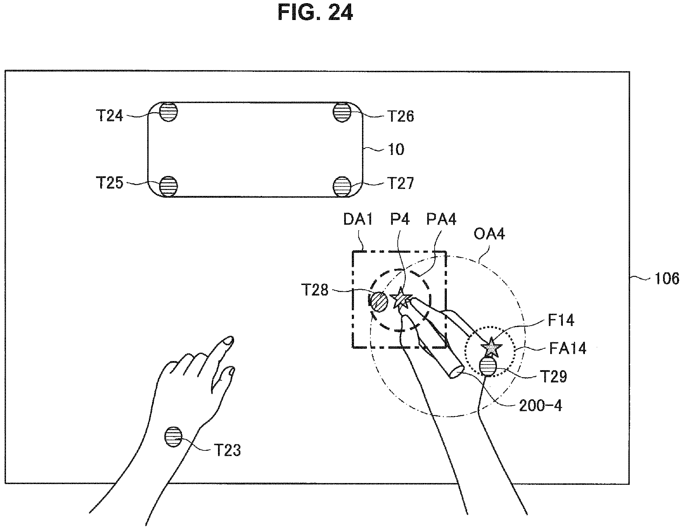

Next, pen input processing will be described with reference to FIG. 24. For example, the user brings the pen 200-4 into contact with the detection surface. The fingers are not in contact with the detection surface but a side surface of the right hand holding the pen 200-4 is in contact with the detection surface.

In this case, the estimated pen-input position P4, the estimated pen-input contact area PA4, the pen input exclusive area OA4, and the effective detection area DA1 are still set. In addition to them, the input position estimation unit 104 determines an estimated finger-input position F14 on the basis of false detection of a finger on the back of the right hand holding the pen 200-4 and sets an estimated finger-input contact area FA14. Further, because the finger-input transition position F14 is included in the pen input exclusive area OA4, the touch input control unit 140 does not set an effective detection area of the estimated finger-input contact area. Therefore, a contact point T29 in the vicinity of the back of the right hand is included in the estimated finger-input contact area FA14 but, as well as the contact points T23 to T27, is not detected. On the contrary, a contact point T28 is included in the effective detection area DA1 and is therefore detected and is included in the estimated pen-input contact area and is therefore determined as a pen input contact point.

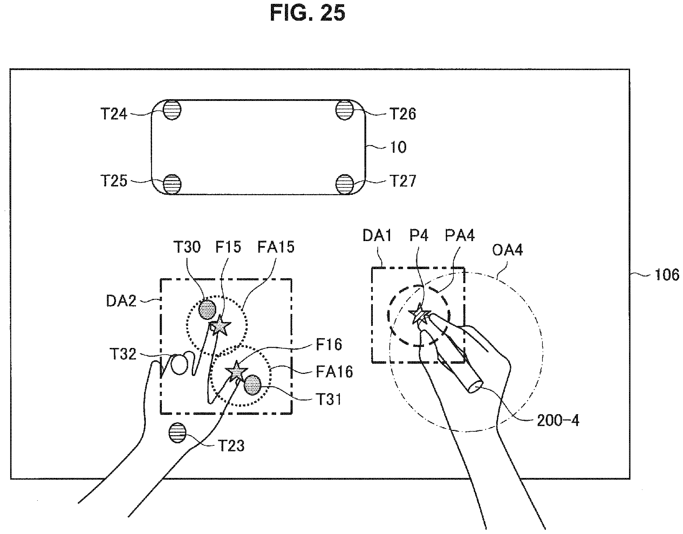

Next, finger input processing will be described with reference to FIG. 25. For example, the user interrupts input with the pen 200-4 held by the right hand and starts input with fingers of the left hand that does not hold the pen 200-4. Note that fingers of the left hand, which do not perform input operation, are partially in contact with the detection surface.

In this case, the estimated pen-input position P4, the estimated pen-input contact area PA4, the pen input exclusive area OA4, and the effective detection area DA1 are still set. In addition to them, the input position estimation unit 104 determines estimated finger-input positions F15 and F16 and sets estimated finger-input contact areas FA15 and FA16. Further, the touch input control unit 140 sets an effective detection area DA2 on the basis of the estimated finger-input contact areas FA15 and FA16. Therefore, contact points T30 to T32 are detected and other contact points T23 to T27 are not detected. Further, the contact points T30 and T31 are included in the estimated finger-input contact areas FA15 and FA16, respectively, and are therefore determined as finger input contact points. However, the contact point T32 is not included in any one of the estimated finger-input contact areas and is therefore determined as an ineffective contact point.

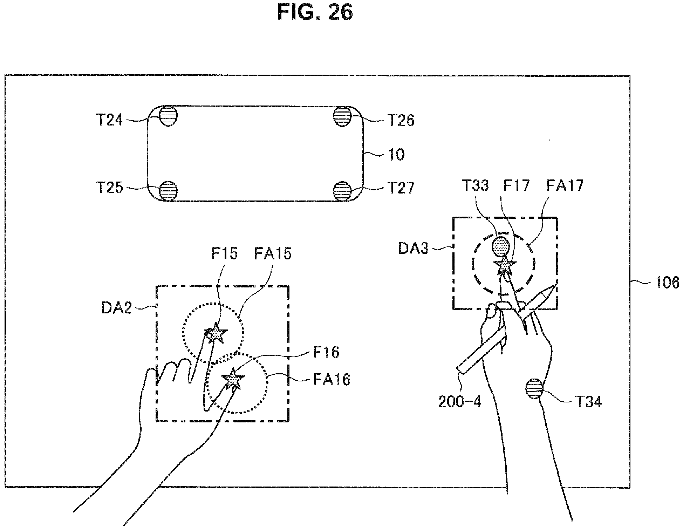

Next, processing of input with a finger of the hand holding the pen 200-4 will be described with reference to FIG. 26. For example, the user interrupts input with the fingers of the left hand and starts input with a finger of the right hand holding the pen 200-4. Note that a wrist of the right hand is in contact with the detection surface.

In this case, the estimated finger-input positions F15 and F16, the estimated finger-input contact areas FA15 and FA16, and the effective detection area DA2 are still set. In addition to them, the input position estimation unit 104 determines an estimated finger-input position F17 and sets an estimated finger-input contact area FA17. Further, the touch input control unit 140 sets an effective detection area DA3 on the basis of the estimated finger-input contact area FA17. Note that a posture of the pen 200-4 has a predetermined inclination from the detection surface, and therefore an estimated pen-input position and the like of input with the pen 200-4 are not set. Therefore, a contact point T33 is included in the estimated finger-input contact area FA17 and is therefore determined as a finger input contact point. However, contact points T34 and T24 to 27 are not included in any one of the effective detection areas DA2 and DA3 and are therefore not detected.

### <5-3. Conclusion of fourth embodiment>

As described above, according to the fourth embodiment of the present disclosure, the information processing device 100-4 sets an effective detection area in which input is detected and which includes a position corresponding to the detection surface of the above-mentioned input at the above-mentioned estimated position (a two-dimensional position of the estimated position) and controls a position of processing based on input on the basis of a detected position included in the effective detection area and the two-dimensional position of the estimated position. Therefore, an input detection range is appropriately reduced, and thus it is possible to improve a speed of response to input and reduce a load of input determination processing while maintaining operability. Further, it is possible to improve a processing speed and reduce a processing load in a detection device, i.e., the touch input unit 106.

Further, the information processing device 100-4 controls the detection device for detecting input so that input is detected only in the above-mentioned effective detection area. Therefore, it is possible to increase a detection speed and reduce a processing load of detection in the detection device. As a result, time between input and execution of processing in response to the input is reduced, and therefore it is possible to improve responsiveness to input operation.

Further, a parameter of the above-mentioned effective detection area is different depending on the type of the operation body. Therefore, an appropriate detection parameter is set in accordance with the type of the operation body, and thus it is possible to restrain generation of a difference in operability between operation bodies.

Further, the parameter of the above-mentioned detection area includes at least one of a size and shape of the effective detection area and detection sensitivity of input in the effective detection area. Therefore, the effective detection area is set on the basis of a parameter whose detection accuracy can be changed in accordance with the operation body. Thus, it is possible to set an effective detection area more suitable for individuality of the operation body. This makes it possible to further restrain the user from feeling a difference in operability between operation bodies.

### <5-4. Modification example>

Hereinabove, the fourth embodiment of the present disclosure has been described. Note that the present embodiment is not limited to the above-mentioned example. Hereinafter, a modification example of the present embodiment will be described.

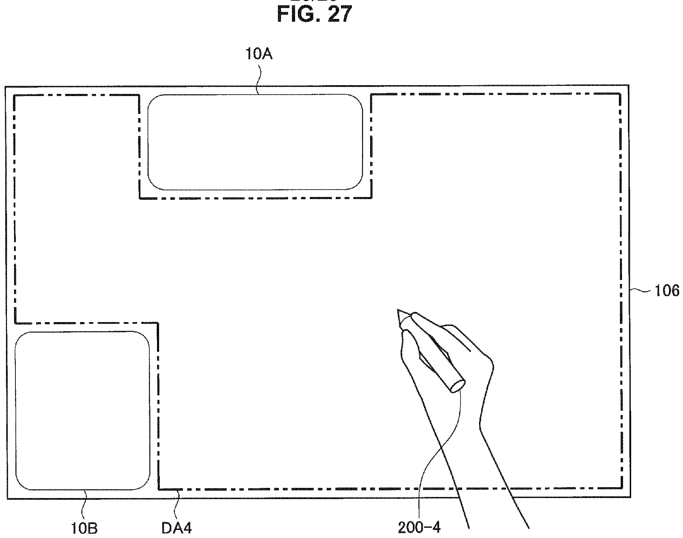

As the modification example of the present embodiment, the information processing device 100-4 may set an effective detection area on the basis of information other than information regarding the operation body. Specifically, the touch input control unit 140 sets an effective detection area on the basis of a detection result of an object other than the operation body. Further, setting of an effective detection area based on a detection result of an object other than the operation body will be described with reference to FIG. 27. FIG. 27 is a diagram illustrating an example of an effective detection area that is set in the information processing device 100-4 according to the present modification example.

First, the input position estimation unit 104 detects an object other than the operation body on the basis of an image captured by the imaging unit 102. For example, the input position estimation unit 104 detects objects 10A and 10B illustrated in FIG. 27. Then, the input position estimation unit 104 sets an area occupied by the detected objects 10A and 10B.

Then, the touch input control unit 140 sets an effective detection area on the basis of positions of the detected objects. For example, the touch input control unit 140 sets an area that does not include the area that is occupied by the objects 10A and 10B and is set by the input position estimation unit 104 as an effective detection area DA4.

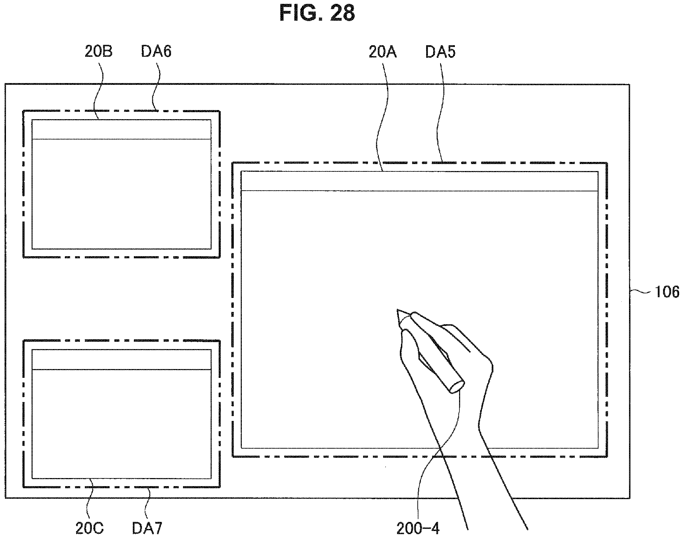

Further, the touch input control unit 140 may set an effective detection area on the basis of information regarding the application 110 that performs processing based on input. Specifically, the information regarding the application 110 includes information in which an attribute regarding input in an area displayed by the application 110 is specified. Further, setting of an effective detection area based on the information regarding the application 110 will be described in detail with reference to FIG. 28. FIG. 28 is a diagram illustrating another example of the effective detection area that is set in the information processing device 100-4 according to the present modification example.

First, the touch input control unit 140 acquires attribute information of a display area from the application 110. Specifically, the touch input control unit 140 acquires, from the application 110, information in which a display area is specified and information indicating whether or not input is performed in the display area. For example, those pieces of information are acquired as information regarding a screen layout.

Then, the touch input control unit 140 sets an effective detection area on the basis of the acquired attribute information of the display area. For example, in a case where screens 20A to 20C illustrated in FIG. 28, which are targets to be subjected to drawing operation, are displayed, the touch input control unit 140 sets areas including the screens 20A to 20C as effective detection areas DA5 to DA7, respectively. Note that the display areas may be detected on the basis of a captured image.

Further, the information regarding the application 110 may be information in which the type of the application 110 is specified. Specifically, the touch input control unit 140 acquires attribute information of the application 110 including the type of the application 110 from the application 110. Then, the touch input control unit 140 sets an effective detection area based on the type indicated by the acquired attribute information. For example, in a case where the type of the application 110 is a drawing application, the touch input control unit 140 sets a larger size of the effective detection area than a size of an effective detection area that is set for another type.

Note that an effective detection area (hereinafter, also referred to as "second effective detection area") which is set on the basis of the information other than the above-mentioned information regarding the operation body may be used for setting processing of an effective detection area based on the information regarding the operation body, i.e., an estimated contact area. For example, the input position estimation unit 104 may exclude a portion of the effective detection area that is set on the basis of the estimated contact area, the portion overlapping the second effective detection area, from the effective detection area. In this case, an effective detection area more suitable for a situation is set. This makes it possible to further improve responsiveness without reducing operability.

Further, although only the shape of the second effective detection area has been described in the above description, another detection parameter of the second effective detection area may be a target to be set. Further, as a matter of course, processing in the present modification example may be used together with the setting processing of an effective detection area described in the present embodiment.

As described above, according to the modification example of the present embodiment, the information processing device 100-4 sets an effective detection area on the basis of a detection result of an object other than the operation body. Therefore, a contact point of the object other than the operation body is not detected. This makes it possible to prevent erroneous determination from occurring in a case where the operation body is positioned in the vicinity of the object.

Further, the information processing device 100-4 sets an effective detection area on the basis of the information regarding the application 110 that performs processing based on input. Therefore, the effective detection area is set within a range in which the application 110 can appropriately obtain input. This makes it possible to improve responsiveness to input operation without influencing processing.

Further, the above-mentioned information regarding the application 110 includes information in which the type of the application 110 is specified. Herein, a request for responsiveness to operation, operation content, and an operation speed are different depending on the type of the application 110 in many cases. Therefore, according to the present configuration, an appropriate effective detection area is set on the basis of the type of the application 110. This makes it possible to prevent variations in operability and responsiveness between the applications 110. Further, it is possible to simplify the setting processing of an effective detection area because another complicated processing is not performed. This makes it possible to reduce a processing load regarding setting of an effective detection area and improve a processing speed.

Further, the above-mentioned information regarding the application 110 includes information in which an attribute regarding input in an area displayed by the application 110 is specified. Herein, an area of a display area in which input can be performed is smaller than the detection surface depending on display content in some cases. Therefore, according to the present configuration, only an area in which input can be performed is set as an effective detection area, and thus a detection range is reduced. This makes it possible to reduce a processing load and a processing speed of detection.

### <6. Hardware configuration of information processing device according to embodiment of the present disclosure>

The information processing device 100 according to each embodiment of the present disclosure has been described above. The processing by the information processing device 100 described above is performed by the cooperation of software, and hardware of the information processing device 100 described below.

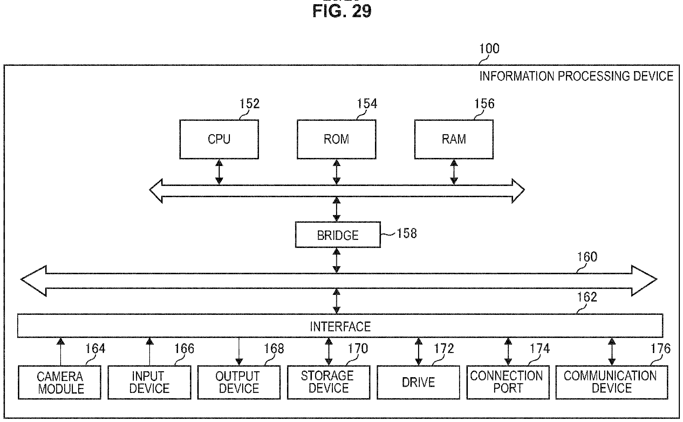

FIG. 29 is an explanatory diagram showing the hardware configuration of the information processing device 100 according to an embodiment of the present disclosure. As shown in FIG. 29, the information processing device 100 includes a central processing unit (CPU) 152, a read only memory (ROM) 154, a random access memory (RAM) 156, a bridge 158, a bus 160, an interface 162, a camera module 164, an input device 166, an output device 168, a storage device 170, a drive 172, a connection port 174, and a communication device 176.

The CPU 152 functions as an arithmetic processing unit and cooperates with various programs to perform operations of the input position estimation unit 104, the input determination unit 108, the application 110, and the touch input control unit 140 in the information processing device 100. In addition, the CPU 152 may be a microprocessor or may be a graphics processing unit (GPU). The ROM 154 stores programs, computation parameters, or the like to be used by the CPU 152. The RAM 156 temporarily stores programs to be used in the execution of the CPU 152, parameters or the like that appropriately change in the execution, or the like. Part of the storage unit in the information processing device 100 includes the ROM 154 and the RAM 156. The CPU 152, the ROM 154, and the RAM 156 are connected to each other via an internal bus including a CPU bus or the like. Note that the input position estimation unit 104 and the input determination unit 108 may be made up of different integrated circuit (IC) chips.

The camera module 164 includes an imaging optical system and a signal conversion element and achieves the function of the imaging unit 102. For example, the camera module 164 includes an imaging optical system such as an imaging lens for collecting light and a zoom lens and a signal conversion element such as a charge coupled device (CCD) or a complementary metal oxide semiconductor (CMOS).

The input device 166 includes, for example, input means for a user to input information such as a mouse, a keyboard, a touch panel (a touch sensor), a button, a microphone, a switch and a lever, an input control circuit that generates an input signal on the basis of an input by a user and outputs the input signal to the CPU 152, and the like. By operating the input device 166, the user of the information processing device 100 can input various data to the information processing device 100 and instruct the information processing device 100 about processing operations.

The output device 168 makes an output to a device such as a projector, a liquid crystal display (LCD) device, an organic light emitting diode (OLED) device, or a lamp as an example of the projection unit 112 in the information processing device 100. Further, the output device 168 may make sound outputs of a speaker, a headphone, or the like.

The storage device 170 is a device for storing data. The storage device 170 may include a storage medium, a recording device that records data in the storage medium, a readout device that reads data from the storage medium, a deletion device that deletes data recorded in the storage medium, and the like. The storage device 170 stores programs executed by the CPU 152, and various data.

The drive 172 is a reader/writer for a storage medium, which is incorporated in or externally attached to the information processing device 100. The drive 172 reads information recorded in a magnetic disk, an optical disc, and a magneto-optical disk which are attached to the drive 172, or a removable storage medium such as a semiconductor memory, and outputs the information to the RAM 154. In addition, the drive 172 can also write information to the removable storage medium.

The connection port 174 is, for example, a bus for connecting to an information processing device or a peripheral device that is disposed outside the information processing device 100. In addition, the connection port 174 may be a universal serial bus (USB).

The communication device 176 is, for example, a communication interface including a communication device for connecting to a network. The communication device 176 is generally a communication device compatible with Bluetooth (a registered trademark) or a wireless local area network (LAN), however, the communication device 176 may be an infrared communication compatible device, a long term evolution (LTE) compatible communication device, or a wire communication device that performs wired communication.

### <7. Conclusion>

Hereinabove, according to the first embodiment of the present disclosure, a position of processing based on an input position, i.e., input is determined on the basis of not only a detection result of the input based on an approach of an operation body but also an image in which the operation body appears. Therefore, it is possible to improve accuracy of the position of the processing, as compared to a case where only the detection result of the input based on the approach of the operation body is used. Thus, it is possible to cause processing that meets intention of the user who operates input to be performed. Further, according to the present embodiment, an input position of the operation body that is currently operated is estimated, and therefore it is possible to select input that is a target to be processed and is based on operation that is actually performed. Thus, even in a case where the user performs operation in different forms every time, it is possible to cause the application 110 and the like to perform processing based on input intended by the user.

Further, according to the second embodiment of the present disclosure, processing regarding an estimated position of input with the pen 200-2 that is not used as an operation body is not performed, and thus it is possible to avoid erroneous determination of input. Accordingly, the above-mentioned input with a finger of the hand holding the pen 200-2 can be processed as the user intends.

Further, according to the third embodiment of the present disclosure, an operation body that is predicted to be brought into contact immediately after a contact is determined as being in contact, and therefore a shift between detection timings of inputs is interpolated. This makes it possible to improve operability of multi-touch.

Further, according to the fourth embodiment of the present disclosure, an input detection range is appropriately reduced, and thus it is possible to improve a speed of response to input and reduce a load of input determination processing while maintaining operability. Further, it is possible to improve a processing speed and reduce a processing load in a detection device, i.e., the touch input unit 106.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the imaging unit 102, the touch input unit 106, and the projection unit 112 are included in the information processing device 100 in the above-mentioned embodiments. However, the present technology is not limited to such an example. For example, the imaging unit 102, the touch input unit 106, and the projection unit 112 may be included in an external device, and information may be transmitted and received or control may be performed via communication between the information processing device 100 and the external device.

Further, an example where the projection unit 112 is included in the information processing device 100 as an output unit has been described in the above-mentioned embodiments. However, a display unit such as a display may be provided instead of or in addition to the projection unit 112. Further, audio output may be performed instead of or in addition to display output using the projection unit 112, the display unit, or the like.

Further, an example where the operation body is the pen 200 or a finger has been described in the above-mentioned embodiments. However, the operation body may be another object. For example, the operation body may be another part of a human body other than a finger, such as a hand or an arm.

Further, an example where a stereo camera is used to estimate a position of the operation body (in particular, a position in the Z-axis direction) has been described in the above-mentioned embodiment. However, an arbitrary sensor capable of measuring a three-dimensional position of a subject may be used instead of or in addition to the stereo camera.

Further, the effects described in this specification are merely illustrative or exemplified effects, and are not limitative. That is, with or in the place of the above effects, the technology according to the present disclosure may achieve other effects that are clear to those skilled in the art from the description of this specification.

Further, not only a processing in which steps shown in the flowcharts of the above embodiments are performed in a time-series manner in accordance with a described sequence but also a processing in which the steps are not necessarily processed in a time-series manner but are executed in parallel or individually is included. Also, it is self-evident that even steps processed in a time-series manner can be appropriately changed in sequence depending on circumstances.

Additionally, the present technology may also be configured as below.
(1) An information processing device including
   a control unit configured to control processing according to input according to approach of an operation body, on a basis of information regarding a detected position of the input based on a detection result of the input, and information regarding a position of the operation body estimated by using image information obtained by capturing an image in which the operation body serves as a subject.
(2) The information processing device according to (1), in which
   the estimated position of the operation body includes a position that is not close to a detection surface of the input.
(3) The information processing device according to (1) or (2), in which
   the control unit
   sets a detection area in which the input is detected, the detection area including a position corresponding to the detection surface of the input at the estimated position of the operation body, and
   controls position information of the processing on a basis of the detected position included in the detection area and the position corresponding to the detection surface of the input at the estimated position of the operation body.
(4) The information processing device according to (3), in which
   the control unit controls a detection device that detects the input such that the input is detected only in the detection area.
(5) The information processing device according to (3) or (4), in which
   the control unit sets the detection area on a basis of at least one of a detection result of an object other than the operation body and information regarding an application that performs the processing according the input.
(6) The information processing device according to (5), in which
   the information regarding the application includes information in which a type of the application is specified.
(7) The information processing device according to (5) or (6), in which
   the information regarding the application includes information in which an attribute regarding the input in an area displayed by the application is specified.
(8) The information processing device according to any one of (3) to (7), in which
   a parameter of the detection area varies depending on a type of the operation body.
(9) The information processing device according to (8), in which
   the parameter of the detection area includes at least one of a size of the detection area, a shape of the detection area, and detection sensitivity to the input in the detection area.
(10) The information processing device according to any one of (1) to (9), in which
   the control unit controls position information of the processing regarding a second operation body other than a first operation body at the estimated position of the operation body equivalent to the detected position, on a basis of a positional relationship between the second operation body and a detection surface of the input.
(11) The information processing device according to any one of (1) to (10), in which
   the control unit controls the processing in accordance with whether or not the estimated position of the operation body is equivalent to the detected position.
(12) The information processing device according to (11), in which
   whether or not the estimated position of the operation body is equivalent to the detected position is determined on a basis of whether or not the detected position is included in an estimated area including a position corresponding to a detection surface of the input at the estimated position of the operation body.
(13) The information processing device according to any one of (1) to (12), in which
   in a case where the input is intermittently detected, the control unit determines the processing on a basis of the estimated position of the operation body at an interval between the detected positions and the detected positions.
(14) The information processing device according to any one of (1) to (13), in which
   the operation body includes an object operated by a user, and
   the control unit controls the processing regarding the input detected in a vicinity of the object operated by the user in accordance with whether or not the operation body is the object operated by the user.
(15) The information processing device according to (14), in which
   in a case where the operation body is an object operated by the user, the control unit controls the processing regarding the input using the object operated by the user, on a basis of a posture of the object operated by the user.
(16) The information processing device according to (15), in which
   information in which the posture of the object operated by the user is specified is obtained via communication.
(17) The information processing device according to any one of (1) to (16), in which
   the operation body includes a hand or a finger of a user.
(18) The information processing device according to any one of (1) to (17), in which
   the control unit controls the processing on a basis of a positional relationship between the estimated position of the operation body and a detection surface of the input.
(19) An information processing method including
   causing a processor to control processing according to input according to approach of an operation body, on a basis of information regarding a detected position of the input based on a detection result of the input, and information regarding a position of the operation body estimated by using image information obtained by capturing an image in which the operation body serves as a subject.
(20) A program for causing a computer to achieve
   a control function of controlling processing according to input according to approach of an operation body on a basis of information regarding a detected position of the input based on a detection result of the input, and information regarding a position of the operation body estimated by using image information obtained by capturing an image in which the operation body serves as a subject.
(21) An information processing system including:
   a detection device configured to detect input based on an approach of an operation body;
   an imaging device configured to capture an image in which the operation body serves as a subject;
   an information processing device including an acquisition unit that obtains a detection result of the input from the detection device and obtains image information obtained by the imaging device capturing the image, an estimation unit that estimates a position of the operation body on a basis of the image information, and a control unit that controls processing based on the input on the basis of information regarding a detected position of the input based on the detection result and information regarding the estimated position of the operation body; and
   an output device configured to perform output on the basis of the processing.

### Reference Signs List

- 100: information processing device
- 102: imaging unit
- 104: input position estimation unit
- 106: touch input unit
- 108: input determination unit
- 110: application
- 112: projection unit
- 120: communication unit
- 140: touch input control unit

## Claims

1. An information processing device comprising
a control unit configured to control processing according to input according to approach of an operation body, on a basis of information regarding a detected position of the input based on a detection result of the input, and information regarding a position of the operation body estimated by using image information obtained by capturing an image in which the operation body serves as a subject.

2. The information processing device according to claim 1, wherein
the estimated position of the operation body includes a position that is not close to a detection surface of the input.

3. The information processing device according to claim 1, wherein
the control unit
sets a detection area in which the input is detected, the detection area including a position corresponding to the detection surface of the input at the estimated position of the operation body, and
controls position information of the processing on a basis of the detected position included in the detection area and the position corresponding to the detection surface of the input at the estimated position of the operation body.

4. The information processing device according to claim 3, wherein
the control unit controls a detection device that detects the input such that the input is detected only in the detection area.

5. The information processing device according to claim 3, wherein
the control unit sets the detection area on a basis of at least one of a detection result of an object other than the operation body and information regarding an application that performs the processing according the input.

6. The information processing device according to claim 5, wherein
the information regarding the application includes information in which a type of the application is specified.

7. The information processing device according to claim 5, wherein
the information regarding the application includes information in which an attribute regarding the input in an area displayed by the application is specified.

8. The information processing device according to claim 3, wherein
a parameter of the detection area varies depending on a type of the operation body.

9. The information processing device according to claim 8, wherein
the parameter of the detection area includes at least one of a size of the detection area, a shape of the detection area, and detection sensitivity to the input in the detection area.

10. The information processing device according to claim 1, wherein
the control unit controls position information of the processing regarding a second operation body other than a first operation body at the estimated position of the operation body equivalent to the detected position, on a basis of a positional relationship between the second operation body and a detection surface of the input.

11. The information processing device according to claim 1, wherein
the control unit controls the processing in accordance with whether or not the estimated position of the operation body is equivalent to the detected position.

12. The information processing device according to claim 11, wherein
whether or not the estimated position of the operation body is equivalent to the detected position is determined on a basis of whether or not the detected position is included in an estimated area including a position corresponding to a detection surface of the input at the estimated position of the operation body.

13. The information processing device according to claim 1, wherein
in a case where the input is intermittently detected, the control unit determines the processing on a basis of the estimated position of the operation body at an interval between the detected positions and the detected positions.

14. The information processing device according to claim 1, wherein
the operation body includes an object operated by a user, and
the control unit controls the processing regarding the input detected in a vicinity of the object operated by the user in accordance with whether or not the operation body is the object operated by the user.

15. The information processing device according to claim 14, wherein
in a case where the operation body is an object operated by the user, the control unit controls the processing regarding the input using the object operated by the user, on a basis of a posture of the object operated by the user.

16. The information processing device according to claim 15, wherein
information in which the posture of the object operated by the user is specified is obtained via communication.

17. The information processing device according to claim 1, wherein
the operation body includes a hand or a finger of a user.

18. The information processing device according to claim 1, wherein
the control unit controls the processing on a basis of a positional relationship between the estimated position of the operation body and a detection surface of the input.

19. An information processing method comprising
causing a processor to control processing according to input according to approach of an operation body, on a basis of information regarding a detected position of the input based on a detection result of the input, and information regarding a position of the operation body estimated by using image information obtained by capturing an image in which the operation body serves as a subject.

20. A program for causing a computer to achieve
a control function of controlling processing according to input according to approach of an operation body on a basis of information regarding a detected position of the input based on a detection result of the input, and information regarding a position of the operation body estimated by using image information obtained by capturing an image in which the operation body serves as a subject.
